# EUROPÄISCHE PATENTSCHRIFT

(11) **EP 3 483 053 B1**
(45) Veröffentlichungstag und Bekanntmachung des Hinweises auf die Patenterteilung: **18.09.2024**
(21) Anmeldenummer: 18000872.4
(22) Anmeldetag: 06.11.2018
(51) Int. Cl.: B62M 9/122, B62M 9/1242

(54) **ELEKTROMECHANISCHES SCHALTWERK**
ELECTROMECHANICAL SWITCHING MECHANISM
MÉCANISME DE CHANGEMENT DE VITESSE ÉLECTROMÉCANIQUE

(30) Priorität: 09.11.2017 DE 102017010348
(43) Veröffentlichungstag der Anmeldung: 15.05.2019
(73) Patentinhaber: SRAM Deutschland GmbH, 97424 Schweinfurt (DE)
(72) Erfinder: Böhm, Robert, 97453 Schonungen/OT Mainberg (DE); Düweling, Sebastian, 97453 Schonungen/OT Mainberg (DE)

(56) Entgegenhaltungen:
- EP-A2- 1 396 419
- EP-A2- 1 657 154
- DE-A1- 102014 015 365
- DE-A1- 102016 010 845
- US-A1- 2017 113 759

## Beschreibung

Die Erfindung betrifft ein elektromechanisches Schaltwerk zur Montage an einer Hinterradachse eines Fahrrades.

Aus dem Stand der Technik sind verschiedene elektromechanische Schaltwerke bekannt. Die EP 1 396 419 zeigt ein elektromechanisches Schaltwerk, das über ein Kabel mit elektrischem Strom versorgt wird. Ein erstes Basiselement (B-Knuckle) des Schaltwerks ist mit einer Schraube (B-Bolt) lösbar am Fahrradrahmen befestigt. Zwischen dem ersten Basiselement und einem zweiten Basiselement ist eine Getriebebox mit einem Getriebe angeordnet. Die Getriebebox wird von mehreren Bolzen durchgriffen, welche die Getriebebox gegenüber dem Basiselement festlegen. Die Bolzen verhindern ein Verrutschen der Getriebebox gegenüber dem Basiselement. Nachteilig bei dieser Konstruktion ist, dass zusätzliche Bauteile in Form von Bolzen benötigt werden, um die Getriebebox zu fixieren. Die Bolzen müssen aufwendig durch die Getriebebox gelegt werden, ohne mit den Funktionsteilen des Getriebes zu kollidieren. Außerdem mindern die Bolzenöffnungen im Gehäuse dessen Dichtigkeit. Der Zusammenbau des Schaltwerks ist aufwendig und zeitintensiv. Ein weiterer Nachteil ist, dass das elektrische Schaltwerk über ein Kabel mit Strom versorgt werden muss.

Es sind auch elektromechanische Schaltwerke mit Batterien bekannt, die in der Nähe oder direkt am Schaltwerk angebracht sind. Die Antriebseinheit des Schaltwerks ist im Bereich eines Basiselements (B-Knuckle) oder im Bereich eines beweglichen Elements (P-Knuckle) beabstandet von der Batterie untergebracht. Die Batterie ist mit der Antriebseinheit des Schaltwerks über ein elektrisches Kabel verbunden und versorgt diese mit Strom. Aufgrund der Beabstandung zwischen Batterie und Antriebseinheit ist eine kabellose Energieversorgung der Antriebseinheit nicht möglich, ein Stromkabel muss den Abstand überbrücken.

Darüber hinaus ist ein gattunggemäßes elektrisches Schaltwerk aus der DE 10 2014 015 365 (vgl. Figur 2) bekannt, welches ein Basiselement aufweist, das entlang einer Montageachse an einem Fahrrad angebracht werden kann. Ein bewegliches Element weist eine daran angebrachte Kettenführungsanordnung auf. Eine Gelenkeinrichtung umfasst Schwenkachsen, die im Wesentlichen senkrecht zu der Montageachse ausgerichtet sind. Eine Batterie ist an dem Basiselement angeordnet. Die Antriebseinheit, bestehend aus Getriebe und Elektromotor, ist in dem Basiselement angeordnet. Die Batterie ist mit dem Motor elektrisch verbunden. Der Motor betätigt das Getriebe, um das bewegliche Element relativ zum Basiselement zu bewegen. Nachteilig bei dieser Ausführung ist, dass die Antriebseinheit in dem Basiselement integriert ist. Das Basiselement dient gleichzeitig als Getriebebox, was eine aufwendige Fertigung und Montage verlangt. Fehlerhafte Teile führen zum Austausch des gesamten Basiselements inklusive der Antriebseinheit.

Es stellt sich daher die Aufgabe, ein hinteres Schaltwerk bereitzustellen, das die Nachteile der bekannten Schaltwerke überwindet. Ein erster Aspekt der Erfindung löst die Aufgabe mit einem elektromechanischen Schaltwerk zur Montage an einer Hinterradachse gemäß Anspruch 1.

Das elektromechanische Schaltwerk ist zur Montage an einer Hinterradachse eines Fahrrads geeignet. Das Schaltwerk weist ein feststehendes Element (B-Knuckle), einen Schwenkmechanismus, ein bewegliches Element (P-Knuckle) mit einer Kettenführungsanordnung und ein Getriebegehäuse auf. Das feststehende Element ist zur lösbaren Montage an einem Fahrradrahmen geeignet. Der Schwenkmechanismus verbindet das feststehende Element mit dem beweglichen Element. Der Schwenkmechanismus ist dazu ausgebildet, eine Bewegung des beweglichen Elements relativ zum feststehenden Element zu ermöglichen. Das separat vom feststehenden Element ausgebildetes Getriebegehäuse ist dazu geeignet, einen elektromechanischen Antrieb zum Antreiben des Schwenkmechanismus aufzunehmen. Das feststehende Element definiert einen Gehäusefreiraum. Das Getriebegehäuse ist zumindest teilweise in dem Gehäusefreiraum des feststehenden Elements angeordnet.

Das feststehende Element ist so ausgebildet, dass eine Energiequelle an dem feststehenden Element zu befestigen ist. Die Energiequelle ist derart an dem feststehenden Element zu befestigen, dass die Energiequelle mit dem elektromechanischen Antrieb in dem Getriebegehäuse elektrisch verbunden ist.

Das feststehende Element mehrteilig ausgebildet ist, und zumindest ein erstes Basiselement (10) zur Montage an einem Fahrradrahmen und ein zweites Basiselement (20) zur Montage an dem ersten Basiselement (10) umfasst, und der Gehäusefreiraum zwischen dem ersten Basiselement (10) und dem zweiten Basiselement (20) definiert ist.

Das feststehende Element aus einem metallischen Werkstoff, insbesondere aus Aluminiumdruckgussteilen, und das Getriebegehäuse (30) aus Kunststoff, insbesondere aus Kunststoffspitzteilen, gefertigt ist.

In montiertem Zustand bilden die Basiselemente in ihrem Inneren den Gehäusefreiraum, in dem das Getriebegehäuse zumindest teilweise angeordnet ist.

Die Energiequelle kann also direkt an dem feststehenden Element befestigt werden. In befestigtem Zustand ist die Energiequelle unmittelbar neben dem Getriebegehäuse angeordnet und mit dem darin befindlichen Antrieb elektrisch verbunden. Es ist keine zusätzliche Aufnahme oder Abstützung für die Batterie zur mechanischen Befestigung notwendig.

Dafür ist zwischen dem feststehenden Element und der Energiequelle insbesondere eine Befestigung ausgebildet, die es erlaubt, die Energiequelle derart an dem feststehenden Element zu befestigen, dass die Energiequelle mit dem elektromechanischen Antrieb in dem Getriebegehäuse elektrisch verbunden ist. Insbesondere weist das feststehende Element die Befestigung für die Energiequelle auf.

Der elektromechanische Antrieb umfasst ein Getriebe, das mit einem Elektromotor gekoppelt ist, und von diesem betätigt wird (auch Antriebseinheit). Sowohl das Getriebe, als auch der Elektromotor sind in dem Getriebegehäuse aufgenommen. Der genaue Aufbau der sich in dem Getriebegehäuse befindenden Antriebsteile ist für die vorliegende Erfindung nicht weiter von Bedeutung. Das separat vom feststehenden Element ausgebildete Getriebegehäuse erlaubt eine unabhängige Vormontage des elektromechanischen Antriebs. Dieser modulare Aufbau erlaubt eine voneinander getrennte Fertigung, Vormontage und Prüfung der einzelnen Bauteile des Schaltwerks. Fehlerhafte Module, insbesondere eine fehlerhafte Antriebseinheit, können ausgetauscht werden, ohne dass andere Module betroffen wären. Weiter erlaubt der modulare Aufbau den Einsatz von unterschiedlichen Materialien.

Die Anordnung des Getriebegehäuses in dem Gehäusefreiraum des feststehenden Elements bietet weitere Vorteile. Es erlaubt die sichere Festlegung des Gehäuses gegenüber dem feststehenden Element. Insbesondere ist das Getriebegehäuse formschlüssig und/oder kraftschlüssig mit dem feststehenden Element verbunden. Insbesondere ist das Getriebegehäuse relativ zu dem feststehenden Element verdrehsicher festgelegt. Das feststehende Element umgreift das Gehäuse und schützt es vor äußeren Einflüssen, wie Schlägen. Außerdem erlaubt diese Anordnung einen platzsparenden Aufbau des Schaltwerks.

Die erfindungsgemäße Ausbildung des feststehenden Elements erlaubt es, sowohl das Getriebegehäuse, als auch die Energiequelle an dem feststehenden Element zu befestigen. In einem am feststehenden Element befestigten Zustand sind das Getriebegehäuse bzw. der darin aufgenommene Antrieb und die Energiequelle derart zueinander positioniert, dass eine elektrische Verbindung besteht. Aufgrund der Anordnung der Antriebseinheit in dem feststehenden Element und der dazu unmittelbar benachbarten Anordnung der Energiequelle an dem feststehenden Element, kann eine direkte Verbindung zwischen Energiequelle und dem elektromechanischen Antrieb hergestellt werden. Es sind keine Kabel nötig, um einen Abstand zwischen Antrieb und Batterie zu überbrücken.

Gemäß einer Ausführungsform ist die Befestigung für die Energiequelle zur lösbaren Befestigung der Energiequelle geeignet. Die Befestigung für die Energiequelle umfasst insbesondere eine Befestigungsöffnung und einen Befestigungshaken. Der Befestigungshaken ist drehbar gelagert. Dies erlaubt eine einfache und werkzeuglose Entnahme und Befestigung der Energiequelle zum Laden.

Zum Verbinden des ersten und zweiten Basiselements werden sie in Fügerichtung miteinander verschraubt. Dazu weist das erste und das zweite Basiselement eine Mehrzahl von ersten und zweiten Fügepunkten auf. Die Fügepunkte sind als Öffnungen ausgebildet und dienen der Aufnahme von Schrauben. Insbesondere drei Fügepunkte zwischen erstem und zweitem Basiselement sind vorgesehen. In verbundenem Zustand sind die Basiselemente zueinander festgelegt.

Vorteilhaft bei der mehrteiligen Ausgestaltung des feststehenden Elementes ist, dass das Getriebegehäuse einfach eingesetzt werden kann. Durch Verbinden des ersten und des zweiten Basiselements wird das Getriebegehäuse zwischen den Basiselementen festgelegt. Dabei sind das Getriebegehäuse und die Basiselemente so aufeinander abgestimmt, dass keine zusätzlichen Bauteile nötig sind, um das Getriebegehäuse relativ zum feststehenden Element festzulegen.

Gemäß einer Ausführungsform ist der Befestigungshaken an dem ersten Basiselement und die Befestigungsöffnung an dem zweiten Basiselement angeordnet. Die Energiequelle kann über einen Schnappmechanismus an dem feststehenden Element befestigt werden. Dazu weist die Energiequelle insbesondere ein Befestigungsgegenstück auf, welches mit dem Befestigungshaken am ersten Basiselement in Eingriff bringbar ist. Außerdem stützt sich die Energiequelle an dem feststehenden Element ab. Dazu weist die Energiequelle einen Befestigungsvorsprung auf, der mit der Befestigungsöffnung im zweiten Basiselement des feststehenden Elements in Eingriff bringbar ist. Die Batterie wird zunächst mit ihrem Befestigungsvorsprung in die Befestigungsöffnung des zweiten Basiselements eingesetzt, positioniert und anschließend der Befestigungshaken in das Gegenstück der Batterie eingeschnappt.

Allgemein gesprochen erlaubt die Befestigung eine lösbare Verbindung zwischen dem feststehenden Element und der Energiequelle. Die Art des Befestigungsmechanismus und dessen Anordnung an dem feststehenden Element und/oder der Energiequelle ist wählbar.

Gemäß einer Ausführungsform ist die Energiequelle rückwärtig an dem feststehenden Element anbringbar. Damit ist die Energiequelle auch rückwärtig von der Antriebseinheit bzw. dem Getriebegehäuse angeordnet. Jedoch ist die Energiequelle unmittelbar benachbart zur Antriebseinheit angeordnet. Die rückwärtige Anordnung macht die Energiequelle leicht zugänglich und bietet genügend Platz, ohne mit den übrigen Bauteilen des Schaltwerks zu kollidieren.

Die Energiequelle kann als aufladbare Batterie oder Akkumulator, beispielsweise als Lithium-Ionen Akkumulator ausgebildet sein.

Gemäß einer Ausführungsform ist das Getriebegehäuse lösbar in dem feststehenden Element angeordnet. Das feststehende Element kann entweder ein- oder mehrteilig ausgebildet sein. Bei einer einstückigen Ausführungsform des feststehenden Elements könnte das Getriebegehäuse beispielsweise von einer Seite in einen Gehäusefreiraum eingeschnappt werden. Bei einer mehrstückigen Ausführungsform des feststehenden Elements mit einem ersten und zweiten Basiselement ist das Getriebegehäuse in verbundenem Zustand der beiden Basiselemente im Gehäusefreiraum festgelegt. Das Getriebegehäuse wird in den Gehäusefreiraum des ersten Basiselements eingesetzt und durch die Montage des zweiten Basiselements am ersten Basiselement im Gehäusefreiraum festgelegt. Das Getriebegehäuse ist gegenüber den Basiselementen in alle Richtungen festgelegt. Zum Lösen des Getriebegehäuses müssen die beiden Basiselemente demontiert werden.

Die äußeren Konturen des Getriebegehäuses sind dabei so auf das feststehende Element abgestimmt, dass die Getriebebox mit der Innenkontur des feststehenden Elements in Eingriff gebracht werden kann. Mit anderen Worten bildet das Getriebegehäuse ein Negativ zur Innenkontur der Basiselemente. Insbesondere lässt sich das Getriebegehäuse nur entlang der Fügeachse in das zweistückige Basiselement einsetzen bzw. aus diesem entnehmen. Diese Ausführung führt zu einem besonders festen Sitz des Getriebegehäuses im B-Knuckle. Es ist keine weitere Verschraubung oder Befestigung zwischen dem Getriebegehäuse und dem feststehenden Element mehr nötig.

Gemäß einer Ausführungsform weist das Getriebegehäuse einen ersten und einen zweiten Gehäuseteil auf. Die beiden Gehäuseteile können an einer Mehrzahl von beispielsweise sechs Gehäusefügepunkten mittels Schrauben verbunden werden. Eine Verbindung der Gehäuseteile entlang der Fügeachse, welche der Fügerichtung der Basiselemente entspricht, erlaubt eine besonders einfache Montage.

Insbesondere ist das erste Gehäuseteil in dem ersten Gehäusefreiraum des ersten Basiselements und das zweite Gehäuseteil in dem zweiten Gehäusefreiraum des zweiten Basiselements aufgenommen.

Gemäß einer Ausführungsform gibt es eine elektrische Schnittstelle zwischen dem Getriebegehäuse und der Energiequelle. Insbesondere weist das Getriebegehäuse eine elektrische Schnittstelle zur Energiequelle auf, welche als elektrische Kontakte ausgebildet sein können. Die elektrischen Kontakte am Getriebegehäuse wirken mit entsprechenden Gegenkontakten an der Energiequelle zusammen. Aufgrund der direkt benachbarten Anordnung von Getriebegehäuse und Energiequelle am feststehenden Element, sind keine Kabel zur Energieübertragung notwendig. Elektrischer Strom wird direkt von der Energiequelle auf den Antrieb, insbesondere den Elektromotor im Getriebegehäuse übertragen.

Gemäß einer Ausführungsform weist der Schwenkmechanismus ein äußeres Schwenkelement und ein inneres Schwenkelement auf. Das äußere Schwenkelement ist über einen ersten Schwenkbolzen drehbar mit dem feststehenden Element und über einen dritten Schwenkbolzen drehbar mit dem beweglichen Element verbunden. Das innere Schwenkelement ist über einen zweiten Schwenkbolzen drehbar mit dem feststehenden Element und über einen vierten Schwenkbolzen drehbar mit dem beweglichen Element verbunden.

Insbesondere umfasst das innere Schwenkelement einen ersten und einen zweiten Schwenkarm. Der erste Schwenkarm ist oberhalb des zweiten Schwenkarms angeordnet. Der erste und der zweite Schwenkarm des inneren Schwenkelements ist jeweils drehbar mit dem feststehenden Element über den zweiten Schwenkbolzen und mit dem beweglichen Element über den vierten Schwenkbolzen verbunden. Die Schwenkarme sind separat ausgebildete Bauteile. Die separaten Schwenkarme werden mit Hilfe des zweiten und vierten Schwenkbolzens zueinander positioniert. Gemäß einer Ausführungsform versteift ein Versteifungsbolzen den unteren und den oberen inneren Schwenkarm zueinander. Er verläuft parallel zu den Schwenkbolzen des Schwenkmechanismus.

Gemäß einer Ausführungsform definieren die vier Schwenkbolzen vier Schwenkachsen des Schwenkmechanismus, die im Wesentlichen senkrecht zu der Montageachse des Schaltwerks bzw. der Hinterradachse des Fahrrads ausgerichtet sind. Mit anderen Worten liegen die vier Schwenkachsen jeweils in einer Ebene, die senkrecht zur Hinterradachse liegt, oder parallel zu den Ritzelebenen.

Gemäß einer Ausführungsform weist das erste Basiselement eine erste obere Bolzenaufnahme und das zweite Basiselement eine erste untere Bolzenaufnahme zur Aufnahme des ersten Schwenkbolzens auf. Weiter weist das erste Basiselement eine zweite obere Bolzenaufnahme und das zweite Basiselement eine zweite untere Bolzenaufnahme zur Aufnahme des zweiten Schwenkbolzens auf. Die Bolzenaufnahmen des ersten und zweiten Basiselements erstrecken sich in einer Ebene, die im Wesentlichen senkrecht zu der Montageachse M bzw. der Hinterradachse A verläuft. Insbesondere umfasst der zweite Schwenkbolzen einen oberen Bolzenstummel und einen unteren Bolzenstummel. Der obere Bolzenstummel ist in der oberen zweiten Bolzenaufnahme des ersten Basiselements gelagert und stützt sich auf dem Getriebegehäuse ab.

Gemäß einer Ausführungsform verläuft die Fügeachse bzw. Fügerichtung des Getriebegehäuses und der Basiselemente im Wesentlichen parallel zu den Schwenkachsen. Damit erstrecken sich auch die Bolzenaufnahmen in den Basiselementen für die erste und zweite Schwenkachse parallel zur Fügerichtung. Mit anderen Worten verlaufen sowohl die Fügeachse, als auch die Schwenkachsen in einer Ebene senkrecht zur Hinterradachse. Diese Ausrichtung der Schwenkachsen erlaubt es, vertikale Stöße besser aufzunehmen. Außerdem erleichtert die durchgängige Ausrichtung der Achsen die Fertigung, Entformung und den Fügeprozess.

Gemäß einer Ausführungsform ist ein Antriebsarm zwischen dem elektromechanischen Antrieb und dem beweglichen Element angeordnet. Insbesondere ist der Antriebsarm mit dem Getriebe gekoppelt und bewegt das bewegliche Element als Reaktion auf den Betrieb des Getriebes des elektromechanischen Antriebs. Das Getriebe umfasst eine Ausgangswelle, mit welcher der Antriebsarm drehfest gekoppelt ist. Der Antriebsarm kann einen Anschlag aufweisen, der gegen den Schwenkmechanismus, insbesondere den unteren inneren Schwenkarm drückt. Der Antriebsarm drückt den Schwenkmechanismus in eine erste Richtung - insbesondere nach außen, also in Schaltrichtung von einem größeren Ritzel auf ein kleineres Ritzel. Die Ausgangswelle dreht sich dazu im Uhrzeigersinn. Die Ausgangswelle verläuft koaxial zu der zweiten Schwenkachse bzw. den beiden Bolzenstummeln des zweiten Schwenkbolzens. Die Ausgangswelle ist vom Schwenkbolzen entkoppelt.

Gemäß einer Ausführungsform ist eine Rückstellfeder auf bzw. um den vierten Schwenkbolzen gelagert. Eine Längsachse der Feder verläuft koaxial mit der vierten Schwenkachse. Insbesondere sind die Federschenkel der Rückstellfeder zwischen dem beweglichen Element und dem Antriebsarm gespannt. Die Rückstellfeder liegt einerseits an dem Antriebsarm und andererseits an dem beweglichen Element an. Die Rückstellfeder spannt das Schaltwerk, insbesondere das bewegliche Element gegenüber dem feststehenden Element vor. Insbesondere wird der Antriebsarm in eine zweite Richtung nach innen, also in Schaltrichtung von einem kleineren Ritzel auf ein größeres Ritzel vorgespannt. Das heißt, der Schwenkmechanismus wird nach innen gedrückt. Beim Schalten auf ein kleineres Ritzel (outboard) muss der elektrische Antrieb den Schwenkmechanismus entgegen der Federkraft bewegen. Beim Schalten auf ein größeres Ritzel (inboard) unterstützt die Vorspannung der Rückstellfeder den elektrischen Antrieb. Der Antriebsarm drückt nach innen gegen die Feder und der nach innen vorgespannte Schwenkmechanismus folgt.

Alternativ könnte die Feder das Schaltwerk auch nach außen vorspannen. Dafür müsste die Feder in die entgegengesetzte Richtung gewickelt werden. Entsprechend entgegensetzt müsste dann auch der Antriebsarm von außen nach innen gegen den Schwenkarm drücken und die Feder außen an dem Antriebsarm anliegen. Dies hätte den Vorteil, dass die Feder den Motor bei Schalten von einem großen auf ein kleineres Ritzel unterstützt (outboard). In diese Richtung muss besonders viel Kraft zum Schalten aufgebracht werden. Außerdem können so auch Schläge von außen abgefedert werden. Diese Ausführungsform ist nicht gezeigt.

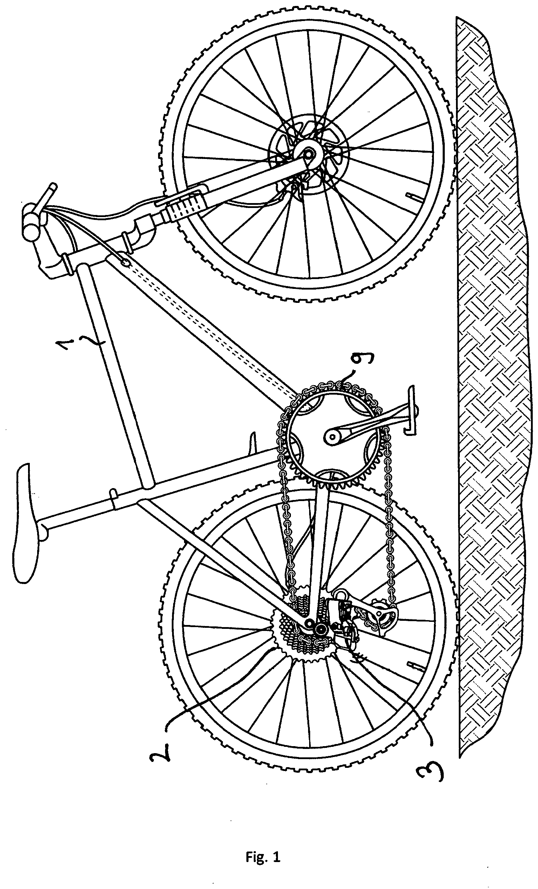

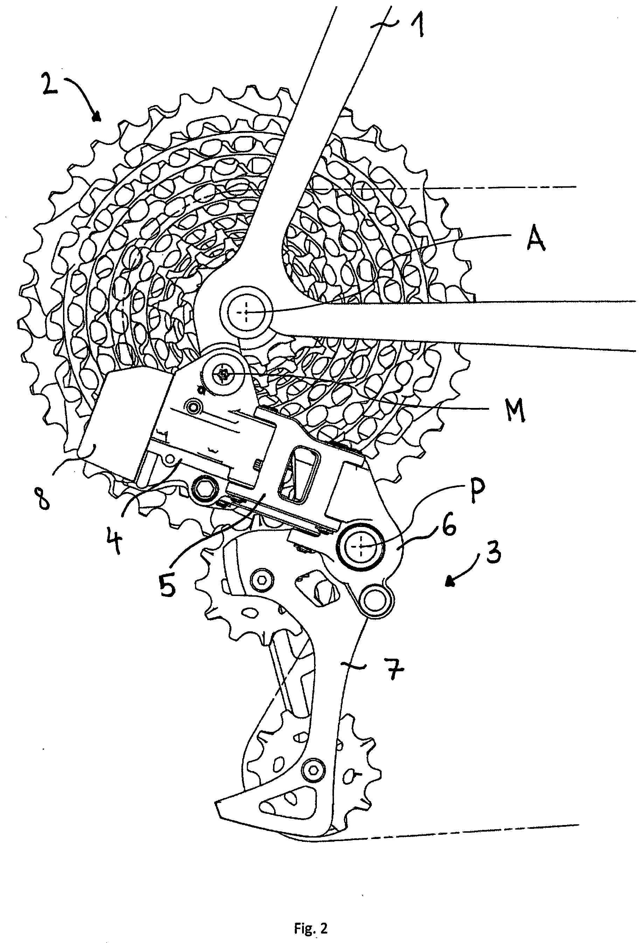

Ein weiterer Aspekt der Erfindung betrifft die Montage des Schaltwerks. Üblicherweise werden hintere Schaltwerke am rechten Ausfallende des Rahmens mit Hilfe eines Schaltauges befestigt. Das Schaltauge wird dazu an seinem einen Ende koaxial mit der Hinterradachse A am Rahmen festgelegt und an seinem anderen Ende mit dem Basiselement (Beat-Knuckle) entlang der Montageachse M verbunden. Somit sind die Hinterradachse A und die Montageachse M voneinander beabstandet. Dies entspricht auch den in Figur 1 und 2 gezeigten Ausführungsformen. Gemäß einer hier nicht gezeigten Ausführungsform ist das erfindungsgemäße elektromechanische Schaltwerk auch zur koaxialen Montage an einer Hinterradachse geeignet. Das bedeutet, die Montageachse M des Schaltwerks entspricht der Hinterradachse A. Das erste Basiselement zur Befestigung am Fahrradrahmen könnte einen inneren Montagearm und einen äußeren Montagearm aufweisen. Die Montagearme sind in axialer Richtung voneinander beabstandet. In montiertem Zustand befinden sich der erste Montagearm auf einer Innenseite des Rahmens und der zweite Arm auf einer Außenseite des Rahmens. Die Arme weisen jeweils eine Aufnahme für den B-Bolt auf. Das erste Basiselement wird mit Hilfe des B-Bolts, welcher die beiden Arme und den Fahrradrahmen durchgreift, am Fahrradrahmen befestigt. Das zweite Basiselement und die übrigen Teile des Schaltwerks folgen prinzipiell den vorhergegangen Ausführungsformen. Eine koaxiale Montage des Schaltwerks mit der Hinterradachse A hat den Vorteil, dass keine schadensanfälligen und instabilen Schaltaugen benötigt werden. Auch eine genauere, weniger toleranzabhängige Montage ist möglich. Diese Ausführungsform ist nicht gezeigt.

### Kurzbeschreibung der Zeichnungen

- Fig. 1: herkömmliches elektrisches Schaltwerk an einem Fahrrad installiert
- Fig. 2: vergrößerte Seitenansicht eines herkömmlichen elektrischen Schaltwerks
- Fig. 3: perspektivische Ansicht des erfindungsgemäßen elektrischen Schaltwerks
- Fig. 4: perspektivische Außenansicht einer Unterbaugruppe des Schaltwerks
- Fig. 5: perspektivische Innenansicht einer Unterbaugruppe des Schaltwerks
- Fig. 5a: Draufsicht auf Fig. 5
- Fig. 5b: Schnitt B-B entlang der Schwenkachsen S1 und S2
- Fig. 6a: Außenansicht einer Unterbaugruppe des Schaltwerks
- Fig. 6b: perspektivische Außenansicht der Unterbaugruppe aus Fig. 6a
- Fig. 6c: Innenansicht der Unterbaugruppe aus Fig. 6a
- Fig. 6d: perspektivische Innenansicht der Unterbaugruppe aus Fig. 6a
- Fig. 7: auseinandergezogene perspektivische Ansicht einer Unterbaugruppe
- Fig. 8: perspektivische Innenansicht einer weiteren Ausführungsform
- Fig. 9: perspektivische Ansicht einer Energiequelle
- Fig. 10: auseinandergezogene Außenansicht von Fig. 8
- Fig. 11a: Außenansicht des montierten ersten und zweiten Basiselements
- Fig. 11b: perspektivische Innenansicht von Fig. 11a

### Detaillierte Beschreibung der bevorzugten Ausführungsformen

Die Ausführungsformen der Erfindung werden hierin in Bezug auf die Zeichnungen beschrieben. Es versteht sich, dass die dargelegten Zeichnungen und Beschreibungen lediglich zur Veranschaulichung bereitgestellt werden und die Erfindung nicht einschränken. Für ein besseres Verständnis der Erfindung zeigen die Figuren verschiedene Unterbaugruppen bzw. Montagestadien der Schaltwerksausführungen in verschieden großen Maßstäben.

Figuren 1 und 2 zeigen aus dem Stand der Technik bekannte elektromechanische hintere Schaltwerke 3, die an einer Hinterradachse A montiert sind. Der in Figur 1 gezeigte Fahrradantrieb umfasst ein vorderes Einzelkettenrad 9, ein hinteres Ritzelpaket 2 und eine Kette, die mit Hilfe des hinteren Schaltwerks 3 von einem Ritzel zum nächsten bewegt werden kann. Antriebe mit nur einem vorderen Kettenrad benötigen keinen vorderen Umwerfer und werden bevorzugt mit einer erhöhten Anzahl von 11, 12 oder 13 hinteren Ritzeln kombiniert. Ritzelpakete solcher Antriebe verfügen über eine große Gangspreizung von 500 % oder mehr. Solche Gangspreizungen können mit einem kleinsten Ritzel mit 9, 10 oder 11 Zähnen und einem größten Ritzel mit 50 Zähnen oder mehr erreicht werden. Selbstverständlich könnte das erfindungsgemäße Schaltwerk auch mit einem Antrieb mit mehreren vorderen Kettenrädern und einem vorderen Umwerfer kombiniert werden.

Die im Folgenden verwendeten Richtungsangaben "vorne" und "hinten", "außen" und "innen, "oben" und "unten", "links" und "rechts" beziehen sich auf ein Fahrrad, das standardgemäß in Fahrtrichtung ausgerichtet und verwendet wird. Der Fahrradrahmen 1 hat ein linkes und ein rechtes hinteres Ausfallende, zwischen denen das Hinterrad montiert ist. Das Hinterrad dreht sich zusammen mit dem Ritzelpaket 2 um die Hinterradachse A. Das größte Ritzel des Ritzelpakets 2 ist weiter innen als die kleineren Ritzel angeordnet. Beim Schalten von einem größeren Ritzel auf ein kleineres Ritzel, bewegt das hintere Schaltwerk 3 die Kette nach außen (outboard). Beim Schalten von einem kleineren Ritzel auf ein größeres Ritzel, bewegt das hintere Schaltwerk 3 die Kette nach innen (inboard). Die in Figur 1 und 2 gezeigten Schaltwerke 3 sind auf herkömmliche Weise mit einem Schaltauge entlang der Montageachse M am Rahmen 1 und der Hinterradachse A befestigt. Der Abstand zwischen der Montageachse M und der Hinterradachse A wird von dem Schaltauge überbrückt.

Das elektromechanische Schaltwerk 3 in Figur 2 umfasst ein feststehendes Element 4, das auch als Basiselement oder B-Knuckle bezeichnet wird, und an einem Fahrradrahmen 1 angebracht werden kann und ein bewegliches Element 6, das auch P-Knuckle genannt wird. Die Kettenführungsanordnung 7 mit einem oberen und einem unteren Kettenführungsröllchen ist um eine Drehachse P drehbar mit dem beweglichen Element 6 verbunden. Ein Schwenkmechanismus 5 mit einem äußeren und einem inneren Schwenkelement ist jeweils schwenkbar mit dem feststehenden Element 4 und dem beweglichen Element 6 verbunden und ermöglicht die Verlagerung der beweglichen Anordnung 6 und 7 relativ zu dem feststehenden Element 4. In dem feststehenden Element 4 ist sowohl das Getriebe, als auch der Elektromotor des elektromechanischen Antriebs des Schaltwerks 3 integriert. Rückwärtig von dem feststehenden Element 4 ist eine Batterie 8 lösbar an dem feststehenden Element 4 angeordnet.

Der Schwenkmechanismus 5 kann ein Gelenkmechanismus vom geraden Parallelogramm-Typ (Figur 2) oder vom schrägen Parallelogramm-Typ (Figur 1) sein. Der in Figur 2 gezeigte Schwenkmechanismus 5 vom geraden Typ hat eine Gelenkeinrichtung mit Schwenkbolzen bzw. Schwenkachsen, die im Wesentlichen senkrecht (d. h. innerhalb einiger weniger Grade) zu der Achsenrichtung der Hinterradachse A liegen. Die Schwenkachsen können auch als parallel zu den Ebenen angesehen werden, die von den Ritzeln definiert werden. Dies bewirkt, dass die bewegliche Anordnung 6 und 7 sich beim Schalten im Wesentlichen horizontal bewegt. Wenn sich ein Fahrrad über unebenes Gelände bewegt, wirken Kräfte in der vertikalen Richtung auf den P-Knuckle 6 des Schaltwerks 3. In einem schrägen Gelenkmechanismus, wie er in Figur 1 gezeigt ist, sind die Achsen der Schwenkbolzen in Bezug auf die Ritzelebenen schräg gestellt. Die in vertikale Richtung wirkenden Kräfte können durch die Gelenkeinrichtung auf das Getriebe weitergeleitet werden, da sich die Gelenkeinrichtung in eine Richtung bewegen kann, die eine im Wesentlichen vertikale Komponente hat. Dahingegen bewegt sich der gerade Schwenkmechanismus 5 aufgrund der vertikalen Ausrichtung seiner Schwenkbolzen und Schwenkachsen in eine im Wesentlichen horizontale Richtung.

Die Elemente des Schaltwerks werden folglich von den vertikalen Kräften isoliert, die erzeugt werden, wenn sich das Fahrrad über unebenes Gelände bewegt. Vertikale Stöße werden nicht auf das Getriebe übertragen.

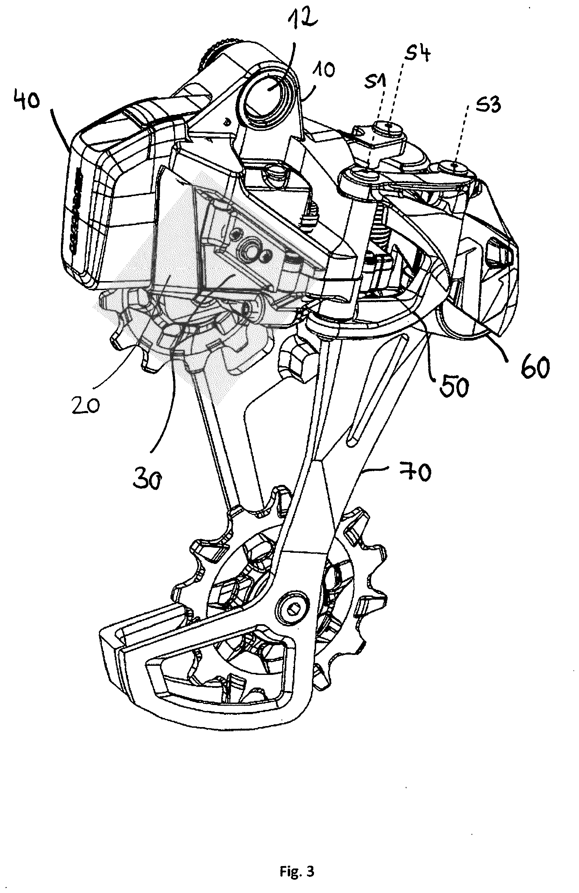

Figur 3 zeigt eine perspektivische Ansicht des erfindungsgemäßen elektrischen Schaltwerks von schräg hinten. Das Schaltwerk besteht ebenfalls aus einem feststehenden Element, einem beweglichen Element 60 mit einer Kettenführungsanordnung 70 und einem Schwenkmechanismus 50. Das feststehende Element umfasst ein erstes Basiselement 10 und ein zweites Basiselement 20. Das erste Basiselement 10 ist über die Aufnahme für den B-Bolt 12 und einem hier nicht gezeigten Bolzen (B-Bolt) an einem Fahrradrahmen zu montieren. Das zweite Basiselement 20 ist an dem ersten Basiselement 10 montiert. Der Schwenkmechanismus 50 ist als gerades Parallelogramm-Viergelenk mit einem inneren und einem äußeren Schwenkelement und vier Schwenkachsen S1, S2, S3, S4 ausgebildet. Die vier Schwenkachsen S1, S2, S3, S4 verlaufen jeweils in Ebenen, die die Hinterradachse A im rechten Winkel schneiden. Mit anderen Worten liegen die Schwenkachsen S1, S2, S3, S4 in Ebenen, die sich parallel zu den hier nicht gezeigten Ritzelebenen erstrecken (vgl. Figur 1 und 2). Die erste und zweite Schwenkachse S1, S2 (verdeckt) verbindet den Schwenkmechanismus 50 mit dem feststehenden Element 10, 20. Die dritte und vierte Schwenkachse S3, S4 verbindet den Schwenkmechanismus 50 mit dem beweglichen Element 60.

Das erste und das zweite Basiselement 10, 20 bilden zusammen das feststehende Element, das einen Gehäusefreiraum definiert. In dem Gehäusefreiraum zwischen den beiden Basiselementen 10, 20 ist das Getriebegehäuse 30 aufgenommen und gegenüber dem feststehenden Element festgelegt. Das feststehende Element ist so ausgebildet, dass eine Batterie 40 in direktem Kontakt zu dem Getriebegehäuse 30 daran befestigt werden kann. Die Batterie 40 ist rückwärtig von dem feststehenden Element angeordnet. Das zweite Basiselement 20 umgreift die Batterie 40 an zumindest zwei Seiten. Das Getriebegehäuse 30 ist direkt benachbart zur Batterie 40 und zumindest teilweise in dem Gehäusefreiraum des feststehenden Elements angeordnet.

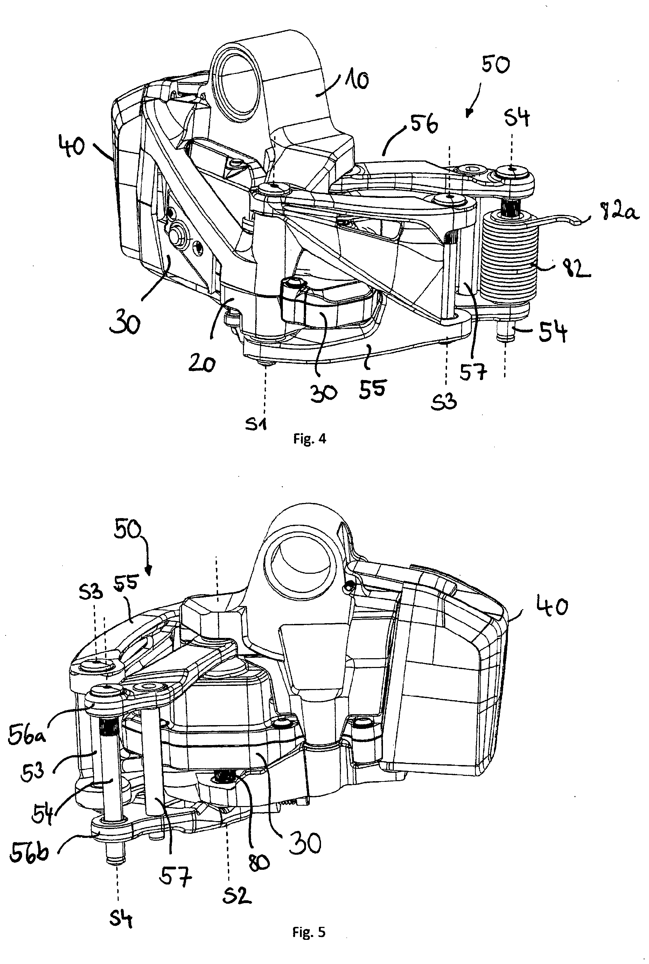

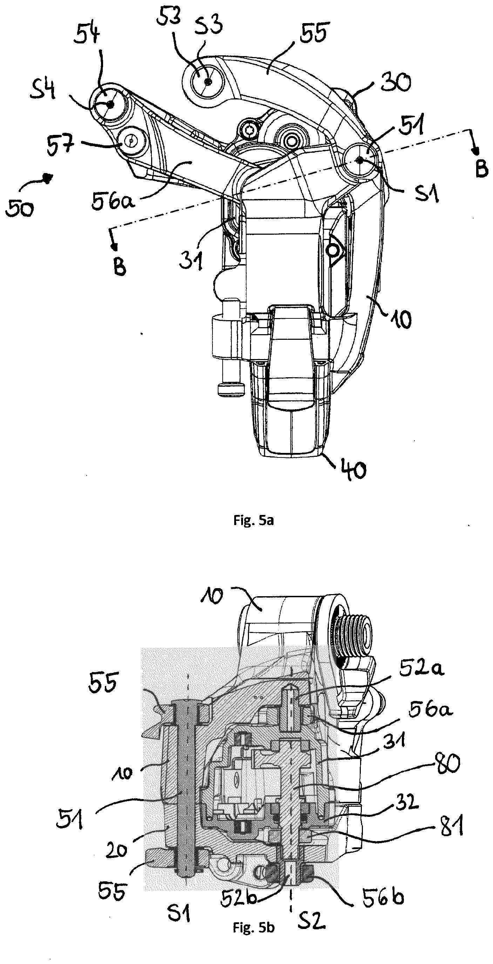

Das Getriebegehäuse 30 ragt nach vorne in Richtung des Schwenkmechanismus 50 aus dem feststehenden Element heraus und erstreckt sich bis in den Bereich des Schwenkmechanismus 50 hinein. Genauer gesagt bilden das innere und äußere Schwenkelement des Schwenkmechanismus 50 einen weiteren Freiraum zwischen sich, in den sich die Getriebebox 30 hinein erstrecken kann. Der weitere Freiraum ist nach oben und unten durch die jeweiligen oberen und unteren Schwenkarme der Schwenkelemente begrenzt. Aussparungen in den Schwenkelementen erlauben ein Verschwenken des Schwenkmechanismus 50 gegenüber dem feststehenden Getriebegehäuse 30, ohne dass diese kollidieren würden (mehr hierzu in Zusammenhang mit Figur 5a). Diese Ausführung erlaubt eine platzsparende Anordnung eines relativ großen Getriebegehäuses 30, das über den vom feststehenden Element 10, 20 definierten Gehäusefreiraum hinausragt, ohne dass die Ausmaße der übrigen Schaltwerksteile vergrößert werden müssten.

Die Kettenführungsanordnung 70 ist um die Achse P drehbar mit dem beweglichen Element 60 verbunden und im Uhrzeigersinn (nach hinten) vorgespannt, so dass eine hier nicht gezeigte, die Kettenführung 70 s-förmig durchlaufende Kette gespannt wird. Die Kettenführungsanordnung 70 umfasst ein oberes und ein unteres Kettenführungsröllchen, die jeweils zwischen zwei Kettenführungskäfighälften drehbar gelagert sind. Das obere Kettenführungsröllchen ist in einem oberen Abstand von der P-Achse um die obere Drehachse drehbar angeordnet. Das untere Kettenführungsröllchen ist in einem unteren Abstand von der P-Achse um die untere Drehasche drehbar angeordnet, wobei das obere Kettenführungsröllchen in einem kleineren Abstand von der P-Achse als das untere Kettenführungsröllchen angeordnet ist. Die Figuren 4 bis 5b zeigen eine Unterbaugruppe des Schaltwerks in einem stark nach innen verschwenkten Zustand des Schwenkmechanismus 50. Zur besseren Übersichtlichkeit sind der P-Knuckle und die Kettenführungsanordnung hier nicht dargestellt. Eine Zusammenschau der Figuren 4 bis 5b erlaubt ein gutes Verständnis der Schwenkfunktion des Schaltwerks.

Die gezeigte Stellung des Schwenkmechanismus 50 entspricht einer Schaltposition auf dem größten bzw. auf dem innersten Ritzel. Hier wird deutlich, dass sich das Getriebegehäuse 30 über den Gehäusefreiraum des ersten und zweiten Basiselements 10, 20 hinaus nach vorne in einen weiteren, vom Schwenkmechanismus 50 gebildeten Freiraum hinein erstreckt. Der weitere Freiraum des Schwenkmechanismus 50 wird nach außen von dem äußeren Schwenkelement 55 und nach innen von dem inneren Schwenkelement 56 begrenzt.

Ausnehmungen in den Schwenkelementen 55, 56 können diese seitliche Begrenzung aufheben. Der weitere Freiraum des Schwenkmechanismus 50 ist nach oben von den oberen Armen und nach unten von den unteren Armen des inneren und äußeren Schwenkelements 55, 56 begrenzt. Dabei sind das Getriebegehäuse 30 und der Schwenkmechanismus 50 so aufeinander abgestimmt, dass sie auch in den Extrempositionen des Schwenkmechanismus 50 nicht kollidieren. Die Schwenkelemente 55, 56 drehen sich über bzw. unter dem Getriebegehäuse 30 durch, oder weisen Ausnehmungen auf, die von dem Getriebegehäuse 30 durchgriffen werden können.

Bei bekannten Konstruktionen wird das Schaltwerk üblicherweise mit einer sich diagonal durch den Schwenkmechanismus erstreckenden Zugfeder in eine Richtung vorgespannt. Eine solche herkömmliche Zugfeder ist beispielsweise vom äußeren Schwenkbolzen am B-Knuckle zum inneren Schwenkbolzen des P-Knuckles gespannt und belegt damit den Raum im Inneren des Schwenkmechanismus:

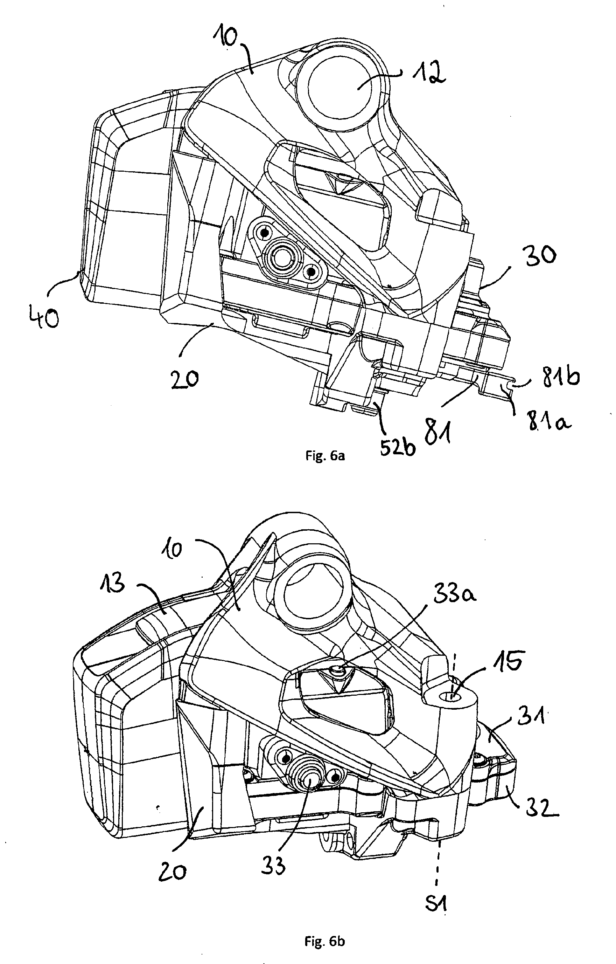

Das in Figur 4 gezeigte Schaltwerk hingegen umfasst eine Rückstellfeder 82 in Form einer Drehfeder, die auf dem vierten Schwenkbolzen 54 gelagert ist. Die Rückstellfeder 82 ist als Schenkel- oder Drehfeder ausgebildet, deren Federschenkel 82a und 82b zwischen dem P-Knuckle und dem Antriebsarm 81 gespannt sind. Ein erstes Ende 82a der Rückstellfeder 82 stützt sich am P-Knuckle und ein zweites Ende der Rückstellfeder 82 (hier nicht sichtbar) an einer nutförmigen Aufnahme 81b am Antriebsarm 81 ab (siehe Figuren 6a bis 6d). Die Federschenkel der Feder 82 drücken jeweils von innen nach außen gegen den Antriebsarm 81 und das feststehende Element 60. Als Resultat wird das Schaltwerk von der Rückstellfeder 82 nach innen vorgespannt. Das heißt, der Schwenkmechanismus 50 wird gegenüber dem feststehenden Element 10, 20 nach innen gedrückt. Diese Anordnung der Feder 82 erstreckt sich nicht in den vom Schwenkmechanismus 50 definierten weiteren Freiraum.

Um den Schwenkmechanismus 50 nach außen, d. h. von einem größeren zu einem kleineren Ritzel hin anzutreiben, werden die Ausgangswelle 80 und der Antriebsarm 81 von dem elektromechanischen Antrieb im Uhrzeigersinn (wie in Figur 5a von oben betrachtet) um die Schwenkachse S2 gedreht. Der Antriebsarm 81 drückt mit seinem Anschlag 81a gegen einen Gegenanschlag am inneren unteren Schwenkarm 56b, was das innere Schwenkelement 56 nach außen bewegt (outboard). Die Federspannung der Rückstellfeder 82 muss dazu vom Motor überwunden werden.

Um den Schwenkmechanismus 50 nach innen, d. h. von einem kleineren zu einem größeren Ritzel hin anzutreiben, werden die Ausgangswelle 80 und der Antriebsarm 81 von dem elektromechanischen Antrieb gegen den Uhrzeigersinn um die Schwenkachse S2 gedreht. Der Antriebsarm 81 gibt dabei den nach innen vorgespannten Schwenkmechanismus 50 frei. Aufgrund der Vorspannung folgt der Schwenkmechanismus 50 der Bewegung des Antriebsarms 81 und verschwenkt nach innen. Die Vorspannung der Rückstellfeder 82 nach innen unterstützt den Motor in diese Richtung.

Eine Drehung des Antriebsarms 81 im Uhrzeigersinn (outboard) wirkt sich direkt auf den Schwenkmechanismus 50 aus und bewegt diesen nach außen. Eine Drehung des Antriebsarms 81 entgegen dem Uhrzeigersinn (inboard) bewegt den Schwenkmechanismus 50 indirekt über die Vorspannung der Rückstellfeder 82.

Dank der Anordnung von Antriebsarm 81 und Feder 82, werden von innen gegen das Schaltwerk wirkende Kräfte nicht auf das Getriebe übertragen. Ein Schlag von innen würde zwar die bewegliche Anordnung 50, 60, 70 nach außen Verschwenken, sich aber nicht auf den Antriebsarm 81 und damit auch nicht auf das Getriebe auswirken.

Diese Anordnung der Feder 82 stellt auch einen Schutzmechanismus für das Schaltwerk dar, weil die Rückstellfeder 82 als Kraftspeicherfeder wirken kann. Beim Schalten von einem kleinen auf ein großes Ritzel (inboard), wird der Schwenkmechanismus 50 nach innen verschwenkt. Für den Fall, dass beim Schalten nicht getreten wird, bewegt der Schwenkmechanismus 50 zwar die Kettenführungsanordnung 70 nach innen auf die Ritzel zu, die Kettenführungsanordnung 70 verschwenkt allerdings aufgrund der gleichbleibenden Kettenspannung nicht um die P-Achse nach vorne. Folglich kommt es zu einer Kollision zwischen der Kettenführungsanordnung 70, insbesondere dem oberen Kettenführungsröllchen, und den Ritzeln. Dieses Problem stellt sich gleichermaßen bei mechanischen und elektromechanischen Schaltwerken. Allerdings kann es bei elektromechanischen Schaltwerken aufgrund der erhöhten Kräfte zu größeren Schäden kommen. Im Falle einer Kollision, bildet das Ritzelpaket einen externen Anschlag für die bewegliche Anordnung 50, 60, 70. Der Schwenkmechanismus 50 kann nicht mehr weiter nach innen verschwenkt werden. Der Antriebsarm 81 kann jedoch weiter von der Ausgangswelle 80 gegen den Uhrzeigersinn gegen den zweiten Federschenkel 82b drücken. Dadurch wird die Feder 82 weiter gespannt und wirkt als Kraftspeicher. Sobald der Fahrer zu treten beginnt, verschwenkt die Kettenführungsanordnung 70 um die P-Achse nach vorne und gibt den Schwenkmechanismus 50 frei. Die in der Feder 82 gespeicherte Kraft wird freigegeben, und verschwenkt den Schwenkmechanismus 50 weiter nach innen (inboard). Der Schaltvorgang wird sozusagen verzögert vollendet. Genauso könnte das Verschwenken des Schwenkmechanismus 50 aufgrund einer externen Kraft blockiert werden. Das Verschwenken könnte in einem solchen Fall mittels der Kraftspeicherfunktion der Feder 82 gleichermaßen verzögert ausgeführt werden, wenn die externe Kraft weggenommen wird.

Damit erfüllt die Rückstellfeder 82 drei Funktionen: Sie spannt das Schaltwerk in eine Richtung vor (inboard). Damit wird ein mechanisches Spiel des Getriebes und des Schwenkmechanismus herausgenommen. Des Weiteren schützt die Feder 82 das Getriebe vor externen Kräften, die von innen nach außen auf das Schaltwerk wirken. Im Falle einer Blockade des Schwenkmechanismus in diese Richtung (inboard) stellt die Feder ein Kraftspeicherelement dar und verzögert die Ausführung des Schaltvorgangs.

Figur 5 zeigt das Schaltwerk in einer perspektivischen Innenansicht. In dieser Ansicht ist auch die Rückstellfeder 82 (um S4 gelagert) und er Antriebsarm 81 (um S2 gelagert) ausgeblendet. So wird die koaxial mit der Schwenkachse S2 ausgerichtete Ausgangswelle 80 sichtbar. Das innere Schwenkelement 56 besteht aus einem oberen und einem unteren Schwenkarm 56a, 56b, welche drehbar auf dem zweiten Schwenkbolzen 52 gelagert sind. Die beiden Arme 56a, 56b des inneren Schwenkelements 56 sind durch einen Versteifungsbolzen 57 miteinander versteift. Der Versteifungsbolzen 57 erstreckt sich parallel zu den Schwenkachsen zwischen den beiden Armen 56a, 56b und ist kraft- und formschlüssig mit den Armen 56a, 56b verbunden, z. B. in einen Arm eingeschraubt und mit dem anderen Arm vernietet (in Figur 5 unten noch unvernietet dargestellt). Die einseitige Vernietung verhindert, dass sich die beiden Arme 56a, 56b bei der Montage des Versteifungsbolzens 57 zueinander verdrehen. Mit anderen Worten bleiben die Öffnungen für den Versteifungsbolzen 57 bei der Montage koaxial zueinander ausgerichtet. Der Versteifungsbolzen 57 verhindert eine Relativbewegung zwischen dem oberen und dem unteren Schwenkarm 56a, 56b. Der Versteifungsbolzen 57 wird nach Montage und Ausrichtung der zweiten und vierten Schwenkbolzen 52, 54 mit dem feststehenden Element 10, 20 und dem beweglichen Element 60 eingesetzt und mit den Armen verbunden. Diese Versteifung des zweiteiligen inneren Schwenkelements 56 mittels einem separaten Versteifungsbolzen 57 bildet einen separaten Aspekt der Erfindung, welcher auch unabhängig von dem Vorhergegangen Anwendung finden kann.

Die Ausbildung mit einem oberen und unteren Schwenkarm 56a, 56b erlaubt die Montage des mehrteiligen zweiten Schwenkbolzens 52. Nur so können die beiden Bolzenstummel 52a, 52b in der gezeigten Ausführungsform montiert werden. Außerdem erleichtert es die Montage und das Spannen der Rückstellfeder 82. Die Feder 82 wird stark gespannt, bringt also eine hohe Vorspannung auf den Schwenkmechanismus 50 auf, damit dieser gleichmäßig stark über den gesamten Schwenkbereich vorgespannt ist.

Wie aus der Draufsicht in Figur 5a hervorgeht, durchgreift ein vorderer Teil des Getriebegehäuses 30 in diesem stark nach innen verschwenkten Zustand das äußere Schwenkelement 55. Dazu weist das äußere Schwenkelement 55 eine Aussparung zwischen seinem oberen und einem unteren Schwenkarm auf. Hier wird auch deutlich, wie weit die Getriebebox 30 nach vorne über eine von der ersten und zweiten Schwenkachse S1, S2 gebildete Ebene (entspricht der Linie B-B) hinausragt. Etwa zwei Drittel des Getriebegehäuses 30 sind im Gehäusefreiraum des feststehenden Elements aufgenommen. Etwa ein Drittel des Getriebegehäuses 30 ragt über den Gehäusefreiraum des feststehenden Elements hinaus und ist in dem vom Schwenkmechanismus 50 definierten weiteren Freiraum aufgenommen.

Die Größe des Getriebegehäuses 30 wird von mehreren Faktoren begrenzt. Nach vorne ist die Gehäusegröße durch den Schwenkmechanismus 50 und nach hinten durch die Anschlussposition der Batterie 40 limitiert. Nach außen wird die Gehäusegröße durch den ersten Schwenkbolzen 51 begrenzt. Der erste Schwenkbolzen 51 ist seitlich außen an dem Getriebegehäuse 30 vorbeigeführt und in dem Basiselement 10, 20 gelagert. Nach innen ist die Gehäusegröße durch die Schwenkebene der Kettenführungsanordnung 70 begrenzt. In der äußersten Schaltposition auf dem kleinsten bzw. äußersten Ritzel ist der Schwenkmechanismus 50 nach ganz außen verschwenkt und die Kettenführungsanordnung 70 ist nach hinten um die P-Achse verschwenkt, um die Kette zu spannen. In dieser Position muss die Kettenführungsanordnung 70, insbesondere das obere Kettenführungsröllchen, seitlich an dem Getriebegehäuse 30 vorbeigeführt werden können, ohne mit der Innenseite des Getriebegehäuses 30 zu kollidieren. Das Getriebegehäuse 30 kann zwar nach innen über das feststehende Element 10, 20 hinausstehen, aber nur bis zu der Ebene, in der die Kettenführungsanordnung 70 verschwenkt wird.

Figur 5b zeigt einen Schnitt entlang der in Figur 5a eingezeichneten Linie B-B. Die Schnittebene entspricht auch der oben beschriebenen gedachten Ebene durch die Schwenkachsen S1 und S2. Die sich in dem Gehäusefreiraum des feststehenden Elements 10, 20 befindliche Gehäusebox 30 weist einen oberen Gehäuseteil 31 und einen unteren Gehäuseteil 32 auf. Innerhalb des Getriebegehäuses 30 ist lediglich die Ausgangswelle 80 dargestellt, welche zwischen den oberen und unteren Gehäuseteilen 31, 32 drehbar gelagert ist, und das untere Gehäuseteil 32 durch eine Öffnung verlässt. Außerhalb des Gehäuses 30 ist die Ausgangswelle 80 drehfest mit dem Antriebsarm 81 gekoppelt. Die übrigen Teile des im Gehäuse 30 untergebrachten elektromechanischen Antriebs, wie Motor oder Getriebezahnräder, sind nicht dargestellt. Der obere Arm des äußeren Schwenkelements 55 umgreift den ersten Schwenkbolzen 51 oberhalb des ersten Basiselements 10 und der untere Arm des äußeren Schwenkelements 55 den ersten Schwenkbolzen 51 unterhalb des zweiten Basiselements 20.

Der zweiteilige zweite Schwenkbolzen 52 besteht aus einem oberen Bolzenstummel 52a und einem unteren Bolzenstummel 52b. Der obere Bolzenstummel 52a ist zwischen dem ersten Basiselement 10 und dem oberen Gehäuseteil 31 drehfest gelagert. Insbesondere ist der obere Bolzenstummel 52a in das obere Basiselement 20 eingepresst und stützt sich an dem oberen Gehäuseteil 31 ab. Der obere Gehäuseteil 31 weist dafür eine Bolzenstummelaufnahme 36 auf. Der obere innere Schwenkarm 56a umgreift den oberen Bolzenstummel 52a und ist relativ zu diesem drehbar. Der untere Bolzenstummel 52b ist in dem zweiten Basiselement 20 drehfest gelagert, insbesondere eingepresst. Der untere innere Schwenkarm 56b umgreift den unteren Bolzenstummel 52b und ist relativ zu diesem drehbar. Somit ist der obere Arm des inneren Schwenkelements 56a unterhalb des ersten Basiselements 10 und der untere Arm des inneren Schwenkelements 56b unterhalb des zweiten Basiselements 20 drehbar mit dem zweiten Schwenkbolzen 52 verbunden. Das untere Ende der Ausgangswelle 80 stützt sich an dem unteren Bolzenstummel 52b ab. Insbesondere wird die Ausgangswelle 80 von einem hülsenförmigen Ende des unteren Bolzenstummels 52b umgriffen und ist in diesem drehbar gelagert. Die Ausgangswelle 80, die beiden Bolzenstummel 52a, 52b und die zweite Schwenkachse S2 verlaufen koaxial. Die Bolzenstummel 52a, 52b und die im unteren Bolzenstummel 52b gelagerte Ausgangswelle 80 tragen zur Positionierung der Getriebebox 30 im Gehäusefreiraum der Basiselemente 10, 20 bei.

Das innere Schwenkelement 56 dreht sich gemeinsam mit dem Antriebsarm 81 um die zweite Schwenkachse S2. Dabei ist die Drehmomentübertragung von der Ausgangswelle 80 auf den Antriebsarm 81 funktional von der drehbaren Lagerung des inneren Schwenkelements 56 getrennt. Das innere Schwenkelement 56 ist drehbar um den oberen und unteren Bolzenstummel 52a, 52b gelagert. Die beiden Bolzenstummel 52a, 52b sind jeweils drehfest mit dem ersten und zweiten Basiselement 10, 20 verbunden. Das innere Schwenkelement 56 bzw. dessen oberer und unterer Arm 56a, 56b drehen sich also um die feststehenden Bolzenstummel 52a, 52b. Die Bolzenstummel 52a, 52b sind koaxial mit der Ausgangswelle 80 angeordnet, aber funktional von dieser getrennt. Die Ausgangswelle 80 dreht sich relativ zu dem zweiten Schwenkbolzen 52 bzw. den beiden Bolzenstummeln 52a, 52b. Die Ausgangswelle 80 ist drehbar auf dem unteren Bolzenstummel 52b gelagert. Die Drehmomentübertragung erfolgt von der Ausgangswelle 80 auf den Antriebsarm 81 unabhängig von der drehbaren Lagerung. Das Drehmoment der Ausgangswelle 80 wird indirekt über den Antriebsarm 81 auf den unteren Schwenkarm 56b und damit auf den Schwenkmechanismus 50 übertragen.

Aus dem Stand der Technik bekannte elektromechanische Schaltwerke weisen üblicherweise Getriebeausgangswellen auf, die sich durch die gesamte Getriebebox erstrecken und an zwei Stellen aus der Getriebebox austreten. Die beiden austretenden Enden der Getriebeausgangswelle dienen üblicherweise auch als Lager für die Schwenkarme des Schwenkmechanismus. Beim Fahren auftretende Erschütterungen oder andere auf das Schaltwerk wirkende externe Kräfte werden vom Schwenkmechanismus, genauer gesagt von den auf der Getriebeausgangswelle gelagerten Schwenkarmen, über die Getriebeausgangswelle auf das Getriebe übertragen und können dieses beschädigen. Dahingegen hat die erfindungsgemäße vom Schwenkmechanismus 50 entkoppelte Ausgangswelle 80 den Vorteil, dass von außen auf das Schaltwerk wirkende Kräfte vom Schwenkmechanismus 50 zwar auf den zweiteiligen Schwenkbolzen 52 übertragen werden, nicht aber auf die Ausgangswelle 80 des Getriebes, die vom Schwenkmechanismus 50 entkoppelt ist: Die Drehmomentübertragung von der Ausgangswelle 80 auf den Schwenkmechanismus 50 erfolgt indirekt über den Antriebsarm 81. Ein weiterer Vorteil besteht darin, dass die Ausgangswelle 80 nur an einer Stelle aus dem Getriebegehäuse 30 austritt. Das Getriebegehäuse 30 muss also nur an einer Stelle geöffnet werden. Eine nach unten weisende Öffnung des Getriebegehäuses 30 ist dabei weniger anfällig für das Eindringen von Schmutz und Wasser.

Zur Verwirklichung einer Relativbewegung zwischen dem feststehenden Element und dem Schwenkmechanismus, können die Schwenkbolzen entweder a) drehfest mit dem feststehenden Element verbunden und die Schwenkelemente um die Schwenkbolzen drehbar gelagert sein, oder b) drehfest mit den Schwenkelementen verbunden und dafür drehbar an dem feststehenden Element gelagert sein.

Die Figuren 6a bis 6d zeigen verschiedene Ansichten einer weiter reduzierten Unterbaugruppe einer Ausführungsform des Schaltwerks. Hier ist ein Großteil des Schwenkmechanismus ausgeblendet. Ohne die Schwenkelemente wird der um die zweite Schwenkachse S2 drehbar gelagerte Antriebsarm 81 mit seinem Anschlag 81a für den Schwenkmechanismus 50 und seiner nutförmigen Aufnahme 81b für die Rückstellfeder 82 sichtbar. Auch der zweite Schwenkbolzen 52, bestehend aus dem oberen und unteren Bolzenstummel 52a, 52b, ist gut zu erkennen. Der obere Bolzenstummel 52a erstreckt sich entlang der Schwenkachse S2 zwischen der Bolzenstummelaufnahme 36 an einer Oberseite des oberen Gehäuseteils 31 und der Unterseite des oberen Basiselements 10. Der untere Schwenkbolzen 52b ist im unteren Basiselement 20 eingepresst und erstreckt sich ebenfalls entlang der zweiten Schwenkachse S2 nach unten aus diesem heraus.

In der äußeren Seitenansicht in Figur 6a ist das feststehende Element, bestehend aus dem ersten Basiselement 10 mit der B-Bolt Aufnahme 12 und dem zweiten Basiselement 20, gezeigt. Das feststehende Element haltert einerseits die Getriebebox 30 und andererseits die Batterie 40. Dabei ist das Getriebegehäuse 30 größtenteils in einem zwischen dem ersten und zweiten Basiselement 10, 20 gebildeten Gehäusefreiraum angeordnet. Das Getriebegehäuse 30 erstreckt sich weiter über diesen Gehäusefreiraum des feststehenden Elements nach vorne hinaus. Rückwärtig von dem Getriebegehäuse 30 und dem feststehenden Element ist die Batterie 40 direkt benachbart zu dem Getriebegehäuse 30 angeordnet.

In der perspektivischen Außenansicht in Figur 6b sind ein am Getriebegehäuse 30 angeordneter Druckknopf 33 zur manuellen Bedienung des Schaltwerks und eine Anzeige in Form einer LED-Leuchte 33a zu erkennen. Die LED-Anzeige 33a kann den Batteriestand oder Störungen anzeigen. Für eine verbesserte Dichtigkeit des Getriebegehäuses 30 ist der Druckknopf 33 als Membran-Knopf ausgebildet. Dazu ist zwischen dem Druckknopf 33 und dem elektromechanischen Antrieb im Inneren des Gehäuses 30 eine Membran angeordnet. Alternativ könnte auch eine Klebefolie als Abdichtung aufgebracht sein. In normalem Betrieb des elektromechanischen Schaltwerks werden Schaltsignale kabellos bzw. drahtlos in Form von Funksignalen von einem am Fahrradlenker angebrachten Schalter an eine Steuerung des hinteren Schaltwerks übertragen. Die Steuerung sowie die Antenne zum Empfangen der Funksignale sind im Inneren des Getriebegehäuses angeordnet. Die manuelle Bedienung der Steuerung direkt an dem Getriebegehäuse entspricht nicht dem normalen Betrieb.

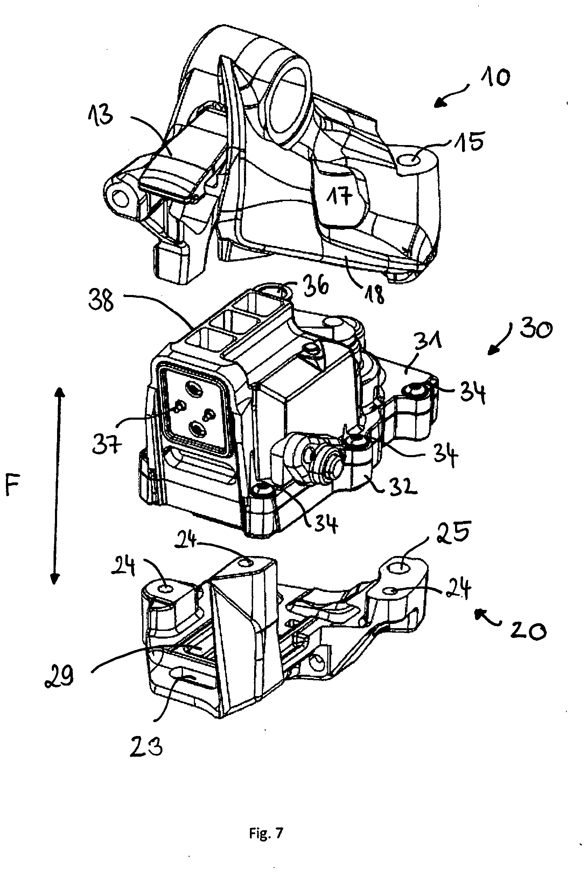

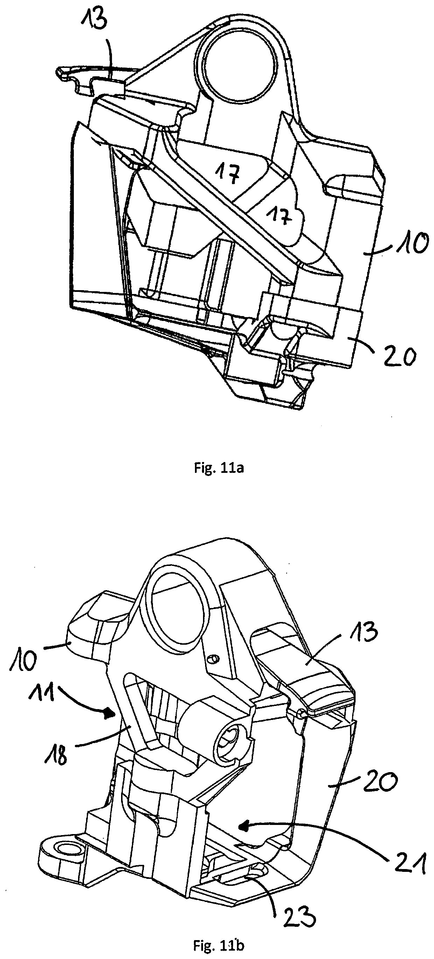

Das feststehende Element 10, 20 ist käfigartig ausgebildet und umgreift das Getriebegehäuse 30 derart, dass es relativ zum feststehenden Element sicher festgelegt ist und gegen Stöße von außen geschützt ist. Das feststehende Element 10, 20 weist aber auch mehrere Aussparungen auf, die die Gehäusebox 30 und deren Funktionsteile 33, 33a, 37 zugänglich und sichtbar machen. Beispielsweise ist die Rückseite des feststehenden Elements weitgehend offen gestaltet, damit die elektrische Schnittstelle 37 zwischen Batterie 40 und Gehäuse 30 zugänglich ist (vgl. Figur 7, 8, 11b). Die käfigartige Struktur und die Aussparungen des feststehenden Elements werden in den Figuren 11a und 11b besonders deutlich.

In der Ansicht in Figur 6b wird die erste obere Bolzenaufnahme 15 in dem ersten Basiselement 10 sichtbar. In Verlängerung der ersten oberen Bolzenaufnahme 15 schließt sich im unteren Basiselement 20 eine erste untere Bolzenaufnahme 25 an (hier nicht sichtbar). Die erste Bolzenaufnahme 15, 25 erstreckt sich koaxial mit der ersten Schwenkachse S1 durch das erste und zweite Basiselement 10, 20 und ist dazu geeignet, den ersten Schwenkbolzen 51 des Schwenkmechanismus 50 aufzunehmen.

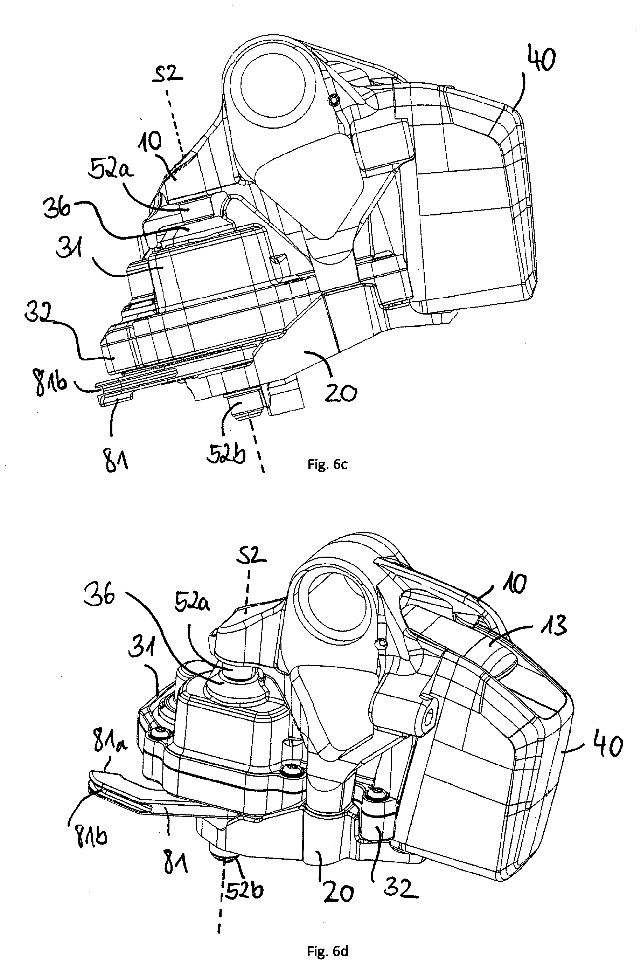

Die Figuren 6c und 6d zeigen die entsprechenden Innenansichten der Unterbaugruppe aus Figur 6a und 6b. Hier wird nun die zweite Schwenkachse S2 sichtbar. Die Basiselemente 10, 20 weisen zweite obere und untere Bolzenaufnahmen 16,26 auf, in denen der zweite zweiteilige Schwenkbolzen 52a, 52b aufgenommen ist. Die zweite Bolzenaufnahme 16, 26 erstreckt sich koaxial mit der zweiten Schwenkachse S2 durch das erste und zweite Basiselement 10, 20 und ist dazu geeignet, den oberen und unteren Bolzenstummel 52a, 52b des Schwenkmechanismus 50 aufzunehmen. Um genügend Angriffsfläche für den inneren oberen Schwenkarm (56a hier nicht gezeigt) zu schaffen, erstreckt sich der obere Bolzenstummel 52a vom ersten Basiselement 10 bis zur oberen Gehäusehälfte 31, wo er in der Bolzenstummelaufnahme 36 gelagert ist. Um genügend Angriffsfläche für den inneren unteren Schwenkarm (56b hier nicht gezeigt) zu schaffen, erstreckt sich der untere Bolzenstummel 52b nach unten aus dem zweiten Basiselement 20 heraus. Allgemein gesprochen weist das feststehende Element eine erste und eine zweite Bolzenaufnahme für den ersten und zweiten Schwenkbolzen 51, 52 des Schwenkmechanismus 50 auf. Die Achsen der Bolzenaufnahmen verlaufen koaxial mit der ersten und zweiten Schwenkachse S1, S2 und damit senkrecht zur Hinterradachse A.

Figur 7 zeigt eine auseinandergezogene perspektivische Ansicht des ersten und zweiten Basiselements 10, 20 und des Getriebegehäuses 30. Das erste und zweite Basiselement 10, 20 ist entlang einer Mehrzahl von ersten (nicht sichtbar) und zweiten Fügepunkten 24, beispielsweise mit Schrauben, zu montieren. Das Getriebegehäuse 30 umfasst ebenfalls einen oberen Teil 31 und einen unteren Teil 32, welche entlang der Gehäusefügepunkte 34 beispielsweise mit Schrauben verbunden sind. Die Achsen der Fügepunkte der Basiselemente 10, 20 und der Gehäuseteile 31, 32 verlaufen in Fügerichtung F bzw. parallel zu den ersten (verdeckt) und zweiten Bolzenaufnahmen 15, 25 in den Basiselementen 10, 20.

Die Kräfte aufnehmenden Strukturteile, wie das feststehende Element 10, 20, können massiver als das Getriebegehäuse 30 ausgebildet sein. Das feststehende Element ist aus einem metallischen Werksstoff gefertigt. Insbesondere handelt es sich um Aluminiumdruckgussteile. Die Batterie 40 ist besonders sicher in dem stabileren Strukturteil 10, 20 verankert. Die Gehäuseteile 31, 32 hingegen sind leichte und einfach zu fertigende Kunststoffspritzteile. Die Bauteile des elektromechanischen Antriebs lassen sich leichter in einem Kunststoffspritzteil integrieren, als in einem Metallgehäuse. Außerdem wird die Übertragung von Funksignalen an die Antenne der in dem Getriebegehäuse 30 angeordneten Getriebesteuerung nicht von dem Kunststoffgehäuse 30 beeinträchtigt. In dem Getriebegehäuse 30 kann außerdem ein Sender zum Senden von Funksignalen angeordnet sein. Das Kunststoffgehäuse 30 und die Aussparungen 17 im B-Knuckle 10, 20 erlauben ein störungsfreies Empfangen und/oder Senden von Funksignalen.

Günstig für die Entformung von Spritz- oder Druckgussteilen sind sich verjüngende Formen. Sowohl die Gehäuseteile 31, 32, als auch die Basiselemente 10, 20 verjüngen sich in Richtung ihrer geschlossenen Seiten, also das jeweils obere Teil nach oben hin und das jeweils untere Teil nach unten hin.

Zum einen wird die Außenkontur des Gehäuses 30 von den im Gehäuse 30 aufgenommenen Bauteilen des Antriebs bestimmt. Die Zahnräder des Getriebes sind auf Achsen gelagert, die direkt in den ersten und zweiten Gehäuseteilen 31, 32 aufgenommen sind.

Zum anderen ist die Außenkontur des Getriebegehäuses 30 auf die Innenkontur der Basiselemente 10, 20 abgestimmt und dient der Festlegung des Gehäuses 30 gegenüber der Basiselemente 10, 20. Die obere Außenseite des ersten Gehäuseteils 31 ist auf eine untere Innenseite des ersten Basiselements 10 abgestimmt, so dass eine formschlüssige und/oder kraftschlüssige Verbindung zwischen dem ersten Gehäuseteil 31 und dem ersten Basiselement 10 hergestellt werden kann. Die untere Außenseite des zweiten Gehäuseteils 32 ist auf eine obere Innenseite des zweiten Basiselements 20 abgestimmt, so dass eine formschlüssige und/oder kraftschlüssige Verbindung zwischen dem zweiten Gehäuseteil 32 und dem zweiten Basiselement 20 hergestellt werden kann.

Das Getriebegehäuse 30 lässt sich nur entlang der Fügerichtung F in das feststehende Element 10, 20 einsetzen bzw. aus diesem entnehmen. Das heißt, der obere Gehäuseteil 31 kann nur in eine erste Fügerichtung entlang der Fügeachse F in den ersten Gehäusefreiraum 11 des ersten Basiselements 10 eingesetzt werden (in Figur 7 nach oben) und in die entgegengesetzte zweite Fügerichtung entlang der Fügeachse F wieder entnommen werden (in Figur 7 nach unten). Entsprechend kann der untere Gehäuseteil 32 nur in eine zweite Fügerichtung entlang der Fügeachse F in den zweiten Gehäusefreiraum 21 des zweiten Basiselements 20 eingesetzt werden (in Figur 7 nach unten) und in die entgegengesetzte erste Fügerichtung entlang der Fügeachse F wieder entnommen werden (in Figur 7 nach oben). Die Getriebeboxteile 31, 32 sind formschlüssig in alle übrigen Richtungen außer der Fügerichtung F in den Basiselementen 10, 20 gehalten. Wenn die beiden Basiselemente 10, 20 miteinander verbunden sind, ist auch eine Bewegung der Getriebebox 30 in Fügerichtung F nicht mehr oder nur noch minimal möglich. Das Getriebegehäuse 30 ist dann formschlüssig von den Basiselementen 10, 20 umgriffen und gegenüber diesen festgelegt. Insbesondere ist eine verdrehsichere Festlegung des Getriebegehäuses 30 gegenüber den Basiselementen 10, 20 um die Achse der Ausgangswelle 80 (entspricht der zweiten Schwenkachse S2) von Bedeutung.

Das Getriebegehäuse 30 weist an seiner Oberseite einen ersten Haltevorsprung 38 auf, der in eine entsprechende Haltevertiefung im ersten Basiselement 10 eingreift (formschlüssige Verbindung). Der Haltevorsprung 38 und die Haltevertiefung verjüngen sich nach oben hin, d. h. die Seitenflächen sind leicht schräg zulaufend. Ein weiterer Haltevorsprung 39 auf der Unterseite des Getriebegehäuses 30 (hier nicht sichtbar) greift formschlüssig in eine Halteausnehmung 29 des zweiten Basiselements 20 ein. Auch diese zweite Halteausnehmung 29 und der Haltevorsprung 39 können sich nach unten hin verjüngen.

Die beiden Haltevorsprünge 38, 39 dienen insbesondere der Verdrehsicherung zwischen Getriebegehäuse 30 und Basiselementen 10, 20. Aufgrund der Drehmomentübertragung von der Ausgangswelle 80 auf den Schwenkmechanismus 50 tendiert das Getriebegehäuse 30 zu einer Verdrehung relativ zum feststehenden Element 10, 20. Dieser Verdrehung wird mittels den Haltvorsprüngen 38, 39 entgegengewirkt. Für eine wirksame Verdrehsicherung sind die Haltvorsprünge 38, 39 möglichst weit entfernt vom Drehpunkt der Ausgangswelle 80 (zweite Schwenkachse S2) angeordnet. Außerdem sind der oder die Haltervorsprünge 38, 39 länglich ausgebildet, um möglichst viel seitlich auftretende Kräfte aufnehmen zu können. Eine verdrehsichere Positionierung des Getriebegehäuses 30 gegenüber dem feststehenden Element ist von großer Bedeutung für die Schaltgenauigkeit des gesamten Schaltwerks.

Das Getriebegehäuse 30 ist aus Kunststoff gefertigt und erlaubt eine leichte elastische Verformung. Das Getriebegehäuse 30 ist geringfügig größer als der von dem ersten und zweiten Basiselement 10, 20 gebildete Gehäusefreiraum, so dass es in montiertem Zustand zu einer Presspassung zwischen Getriebegehäuse 30 und feststehendem Element 10, 20 kommt. Beim Verschrauben der Basiselemente 10, 20 wird der Haltevorsprung 38 in die sich verjüngende Haltevertiefung hineingepresst. Es kommt zu einer leichten Verformung des Getriebegehäuses 30, insbesondere an dem zumindest einem Haltevorsprung 28, und damit zu einer kraftschlüssigen Verbindung zwischen Gehäuse 30 und dem Basiselement 10. Entsprechend kann auch der zweite Haltevorsprung 39 kraftschlüssig in der zweiten Halteausnehmung 29 des zweiten Basiselements 20 gehalten sein.

Eine form- und kraftschlüssige Verbindung zwischen Getriebegehäuse 30 und Basiselementen 10, 20 ermöglicht eine besonders genaue Positionierung und Festlegung des Getriebegehäuses 30 gegenüber den restlichen Modulen des Schaltwerks.

Ein weiterer Vorteil des zumindest einen Haltevorsprungs 38 besteht darin, dass dieser entkoppelt von der restlichen Getriebebox 30, welche den elektromechanischen Antrieb aufnimmt, Kräfte aufnehmen kann, ohne dass diese auf die Funktionsflächen der Getriebebox 30 übertragen werden. Das heißt, die Haltevorsprünge 38, 39 können sich unter den auftretenden Kräften verformen, ohne dass das Getriebegehäuse 30 davon beeinflusst wird. Eine Fehlausrichtung der in dem Getriebegehäuse 30 gelagerten Achsen des Getriebes wird dadurch verhindert.

Das Getriebegehäuse 30 verfügt über eine elektrische Schnittstelle 37 für eine am feststehenden Element 10, 20 zu befestigende Batterie 40. Die elektrische Schnittstelle am Getriebegehäuse 30 weist elektrische Kontakte 37 auf. Die Befestigung für die Energiequelle umfasst einen Befestigungshaken 13, der an dem ersten Basiselement 10 drehbar gelagert ist und eine Befestigungsöffnung 23 im zweiten Basiselement 20. Das Gehäuse 30 ist derart im feststehenden Element 10, 20 angeordnet, dass sich die elektrische Schnittstelle mit den elektrischen Kontakten 37 nahe der Befestigung 13, 23 für die Batterie 40 befinden.

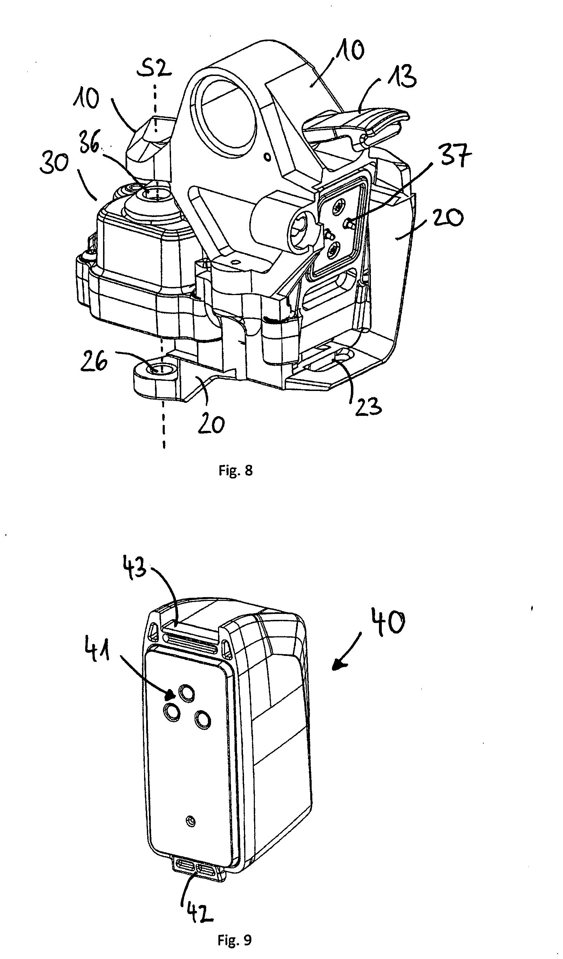

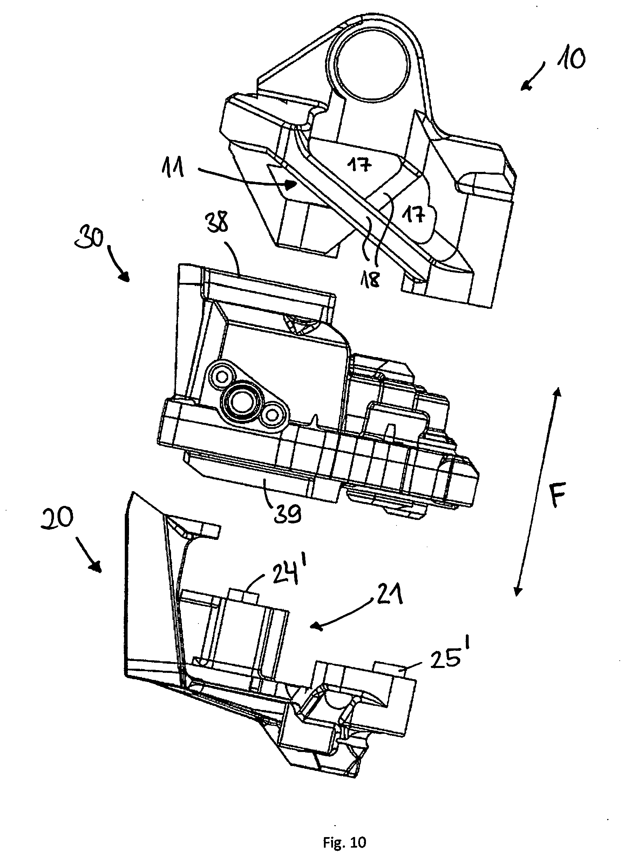

Figuren 8 bis 11b zeigen eine zweite Ausführungsform des feststehenden Elements 10, 20, welche sich nur geringfügig von der in den Figuren 3 bis 7 gezeigten ersten Ausführungsform unterscheidet. Ein Unterschied liegt in der Ausgestaltung der zweiten Fügepunkte 24, 24' und zweiten Achsaufnahme 25, 25' des zweiten Basiselements 20. Diese weisen in der zweiten Ausführungsform optionale Vorsprünge 24', 25' auf, die in das erste Basiselement 10 eingreifen. Die in Figur 10 gezeigten Vorsprünge 24', 25' erleichtern die Montage, weil sie eine Relativbewegung zwischen den Basiselementen 10, 20 verhindern. Das erste und das zweite Basiselement 10, 20 sind mittels der Vorsprünge 24', 25'formschlüssig miteinander verbunden. Im Gegensatz dazu kommt es zwischen dem ersten und dem zweiten Basiselement 10, 20 der ersten Ausführungsform (vgl. Figur 7) erst aufgrund des Getriebegehäuses 30 zu einem Formschluss.

Ein weiterer Unterschied besteht darin, dass in der ersten Ausführungsform der innere untere Schwenkarm 56b unterhalb des zweiten Basiselements 20 auf dem zweiten Bolzenstummel 52b gelagert ist. Das Basiselement 20 liegt also zwischen dem Schwenkarm 56b und dem Antriebsarm 81 (in Figur 5b). Im Vergleich dazu wird der innere untere Schwenkarm 56b im zweiten Ausführungsbeispiel in Figur 8 oberhalb des zweiten Basiselements 20 gelagert. Dazu ist das untere Basiselement 20 so ausgebildet, das genügend Platz zwischen dem Getriebegehäuse 30 und dem unteren Basiselement 20 vorhanden ist, um den unteren Schwenkarm 56b und den Antriebsarm 81 (beide in Figur 8 nicht dargestellt) aufzunehmen. Der untere Schwenkarm 56b liegt also zwischen dem Antriebsarm 81 und dem zweiten Basiselement 20. Die beiden Ausführungsformen unterscheiden sich nicht in für die Erfindung wesentlichen Punkten, weshalb ansonsten dieselben Bezugszeichen verwendet werden.

Die Figuren 8 und 9 zeigen in Zusammenschau die mechanische Anschlussfähigkeit zwischen der Batterie 40 und dem feststehenden Element 10, 20 und auch die elektrische Anschlussfähigkeit zwischen Batterie 40 und Getriebegehäuse 30 bzw. dem im Gehäuse 30 angeordneten E-Motor. Die mechanische Verbindung wird hergestellt, indem zunächst der Befestigungsvorsprung 42 der Batterie 40 in die Befestigungsöffnung 23 des zweiten Basiselements 20 eingeführt wird und danach der drehbar am ersten Basiselement 10 gelagerte Befestigungshaken 13 mit dem Befestigungsgegenstück 43 an der Batterie 40 in Eingriff gebracht wird. Der federnde Befestigungshaken 13 und das Gegenstück 43 bilden einen Schnappmechanismus. Die Batterie 40 stützt sich direkt am zweiten Basiselement 20 des feststehenden Elements ab und wird vom Befestigungshaken 13 gehalten.

In diesem mechanisch verbundenen Zustand der Batterie 40 mit dem feststehenden Element 10, 20 kommen die elektrischen Kontakte 41 der Batterie 40 auf den elektrischen Kontakten 37 des Getriebegehäuses 30 zum Liegen. Die elektrischen Kontakte am Gehäuse 30 sind als Federkontaktstifte 37 ausgebildet, die mit den entsprechenden Federkontaktstiftbasen 41 an der Batterie 40 zusammenwirken. Die Anordnung mit den Federkontaktstiften 37 kann mit zwei Schrauben an dem Getriebegehäuse 30 angebracht werden (siehe Figur 7 und 8). Wenn die Batterie 40 installiert ist, kann elektrische Energie von der Batterie 40 über die elektrischen Kontakte 41, 37 auf den Elektromotor des Antriebes übertragen werden. Optional könnte zwischen der Energiequelle und dem Getriebegehäuse auch eine mechanische Verdrehsicherung in Form von zumindest einer Verdrehsicherungsrippe angeordnet sein und eine Verdrehung der Batterie relativ zum Getriebegehäuse verhindern.

Figur 10 zeigt eine auseinandergezogene Seitenansicht der beiden Basiselement 10, 20 und der Getriebebox 30. Die drei Bauteile 10, 20, 30 wurden in Fügerichtung F auseinandergezogen. Hier werden sowohl der erste Haltevorsprung 38, als auch der zweite Haltevorsprung 39 am Getriebegehäuse 30 sichtbar. Die beiden Vorsprünge 38, 39 an dem Getriebegehäuse 30 greifen formschlüssig und/oder kraftschlüssig in entsprechende Halteausnehmungen in den Basiselementen 10, 20 ein. Die beiden Haltevorsprünge 38, 39 dienen insbesondere der Verdrehsicherung des Getriebegehäuses 30 gegenüber dem feststehenden Element. Das in Zusammenhang mit der ersten Ausführung Beschriebene findet entsprechend Anwendung.

Figur 11a zeigt eine Seitenansicht und Figur 11b eine perspektivische Rückansicht des feststehenden Elements 10, 20. Das erste Basiselement 10 gleicht von hinten betrachtet in etwa einem nach unten geöffneten u-förmigen Profil, welches einen ersten Gehäusefreiraum 11 definiert. Der erste Gehäusefreiraum 11 ist dazu geeignet, das Gehäuse 30, insbesondere den ersten Gehäuseteil 31, zumindest teilweise aufzunehmen. Die Innenflächenkontur des ersten Basiselements 10 ist auf die Außenflächenkontur des ersten Gehäuseteils 31 abgestimmt. Das erste Basiselement 10 weist seitliche Versteifungsrippen 18 und Aussparungen 17 auf. Die Aussparungen 17 machen Funktionsteile der Getriebebox 30 zugänglich. Außerdem erlauben die Aussparungen 17 im feststehenden Element die störungsfreie Übertragung von Funksignalen zur Steuerung des elektromechanischen Schaltwerks in und aus der Getriebebox 30. Das zweite Basiselement 20 gleicht von hinten betrachtet in etwa einem nach oben geöffneten u-förmigen Profil. Das zweite Basiselement 20 definiert einen zweiten Gehäusefreiraum 21, der dazu geeignet ist, das Gehäuse 30, insbesondere den zweiten Gehäuseteil 32, zumindest teilweise aufzunehmen. Die Innenflächenkontur des zweiten Basiselements 20 ist auf die Außenflächenkontur des zweiten Gehäuseteils 21 abgestimmt. Der erste und zweite Gehäusefreiraum 11, 21 bildet den vom feststehenden Element definierten Gehäusefreiraum, in dem das Getriebegehäuse 30 zumindest teilweise angeordnet wird. Der gebildete Gehäusefreiraum und die käfigartige Struktur des feststehenden Elements werden in den Figuren 11a und 11b besonders gut sichtbar.

## Patentansprüche

1. Elektromechanisches Schaltwerk zur Montage an einer Hinterradachse (A) eines Fahrrades aufweisend:
- ein feststehendes Element zur lösbaren Montage an einem Fahrradrahmen,
- ein bewegliches Element (60) mit einer Kettenführungsanordnung (70),
- einen Schwenkmechanismus (50), der das bewegliche Element (60) mit dem feststehenden Element verbindet und dazu ausgebildet ist, eine Bewegung des beweglichen Elements (60) relativ zu dem feststehenden Element zu ermöglichen;
- ein separat vom feststehenden Element ausgebildetes Getriebegehäuse (30), in dem ein elektromechanischer Antrieb zum Antreiben des Schwenkmechanismus (50) aufgenommen ist,
wobei das feststehende Element einen Gehäusefreiraum definiert, in dem das Getriebegehäuse (30) zumindest teilweise angeordnet ist, und
das feststehende Element so ausgebildet ist, dass eine Energiequelle (40) derart an dem feststehenden Element zu befestigen ist, dass die Energiequelle (40) mit dem elektromechanischen Antrieb in dem Getriebegehäuse (30) elektrisch verbunden ist,
wobei das feststehende Element mehrteilig ausgebildet ist, und zumindest ein erstes Basiselement (10) zur Montage an einem Fahrradrahmen und ein zweites Basiselement (20) zur Montage an dem ersten Basiselement (10) umfasst, und der Gehäusefreiraum zwischen dem ersten Basiselement (10) und dem zweiten Basiselement (20) definiert ist, **dadurch gekennzeichnet, dass**
das feststehende Element aus einem metallischen Werkstoff, insbesondere aus Aluminiumdruckgussteilen, und das Getriebegehäuse (30) aus Kunststoff, insbesondere aus Kunststoffspitzteilen, gefertigt ist.

2. Elektromechanisches Schaltwerk nach Anspruch 1, wobei das feststehende Element eine Befestigung für die Energiequelle (40) aufweist, die insbesondere einen drehbar gelagerten Befestigungshaken (13) und eine Befestigungsöffnung (23) umfasst.

3. Elektromechanisches Schaltwerk nach Anspruch 2, wobei der Befestigungshaken (13) an dem ersten Basiselement (10) und die Befestigungsöffnung (23) in dem zweiten Basiselement (20) angeordnet ist.

4. Elektromechanisches Schaltwerk nach Anspruch 3, wobei die Energiequelle (40) ein Befestigungsgegenstück (43), das mit dem Befestigungshaken (13) am ersten Basiselement (10) in Eingriff bringbar ist, und einen Befestigungsvorsprung (42), der mit der Befestigungsausnehmung (23) im zweiten Basiselement (20) in Eingriff bringbar ist, aufweist.

5. Elektromechanisches Schaltwerk nach einem der vorhergehenden Ansprüche, wobei die Energiequelle (40) rückwärtig an dem feststehenden Element befestigbar ist.

6. Elektromechanisches Schaltwerk nach einem der vorhergehenden Ansprüche, wobei das Getriebegehäuse (30) lösbar in dem Gehäusefreiraum des feststehenden Elements angeordnet ist.

7. Elektromechanisches Schaltwerk nach einem der Ansprüche 2 bis 4, wobei das Getriebegehäuse (30) in verbundenem Zustand des ersten Basiselements (10) und des zweiten Basiselements (20) im Gehäusefreiraum form- und/oder kraftschlüssig festgelegt ist.

8. Elektromechanisches Schaltwerk nach einem der vorhergehenden Ansprüche, wobei das Getriebegehäuse (30) einen ersten Gehäuseteil (31) und einen zweiten Gehäuseteil (32) aufweist.

9. Elektromechanisches Schaltwerk nach einem der vorhergehenden Ansprüche, wobei das Getriebegehäuse (30) eine elektrische Schnittstelle, insbesondere elektrische Kontakte (37), zur Energiequelle (40) aufweist.

10. Elektromechanisches Schaltwerk nach einem der vorhergehenden Ansprüche, wobei der Schwenkmechanismus (50) ein äußeres Schwenkelement (55), das über einen ersten Schwenkbolzen (51) drehbar mit dem feststehenden Element und über einen dritten Schwenkbolzen (53) drehbar mit dem beweglichen Element (60) verbunden ist, und ein inneres Schwenkelement (56), das über einen zweiten Schwenkbolzen (52) drehbar mit dem feststehenden Element und über einen vierten Schwenkbolzen (54) drehbar mit dem beweglichen Element (60) verbunden ist, umfasst.

11. Elektromechanisches Schaltwerk nach Anspruch 10, wobei das innere Schwenkelement (56) einen ersten oberen Schwenkarm (56a) und einen zweiten unteren Schwenkarm (56b) umfasst.

12. Elektromechanisches Schaltwerk nach Anspruch 10 oder 11, wobei die vier Schwenkbolzen (51, 52, 53, 54) jeweils eine Schwenkachse (S1, S2, S3, S4) definieren, die im Wesentlichen senkrecht zu der Hinterradachse (A) ausgerichtet sind.

13. Elektromechanisches Schaltwerk nach einem der Ansprüche 2 bis 4, 7 und einem der Ansprüche 10 bis 12, wobei das erste Basiselement (10) eine erste obere Bolzenaufnahme (15) und das zweite Basiselement (20) eine erste untere Bolzenaufnahme (25) zur Aufnahme des ersten Schwenkbolzens (51), und das erste Basiselement (10) eine zweite obere Bolzenaufnahme (16) und das zweite Basiselement (20) eine zweite untere Bolzenaufnahme (26) zur Aufnahme des zweiten Schwenkbolzens (52) aufweisen.

14. Elektromechanisches Schaltwerk nach Anspruch 13, wobei sich die Bolzenaufnahmen (15, 16, 25, 26) des ersten und zweiten Basiselements (10, 20) jeweils im Wesentlichen senkrecht zu der Hinterradachse (A) erstrecken.

15. Elektromechanisches Schaltwerk nach einem der Ansprüche 10 bis 14, wobei der zweite Schwenkbolzen (52) einen ersten oberen Bolzenstummel (52a) und einen zweiten unteren Bolzenstummel (52b) umfasst.

16. Elektromechanisches Schaltwerk nach einem der vorhergehenden Ansprüche, wobei ein Antriebsarm (81), der mit einer Ausgangswelle (80) des elektromechanischen Antriebs drehfest verbunden ist, das bewegliche Element (60) als Reaktion auf den Betrieb des elektromechanischen Antriebs bewegt.

17. Elektromechanisches Schaltwerk nach Anspruch 15 und 16, wobei sich die Ausgangswelle (80) koaxial zu dem zweiten Schwenkbolzen (52), insbesondere zu dem ersten und zweiten Bolzenstummel (52a, 52b), erstreckt.

18. Elektromechanisches Schaltwerk nach einem der Ansprüche 10 bis 17, wobei eine Rückstellfeder (82), welche um den vierten Schwenkbolzen (54) gelagert ist, das bewegliche Element (60) gegenüber dem feststehenden Element vorspannt.

## Claims

1. Electromechanical derailleur for assembly on a rear wheel axis (A) of a bicycle, having:
- a stationary element for releasable assembly on a bicycle frame,
- a movable element (60) having a chain guide arrangement (70),
- a pivoting mechanism (50) which connects the movable element (60) to the stationary element and is configured for enabling a movement of the movable element (60) relative to the stationary element;
- a gearing housing (30) which is configured separately from the stationary element and in which an electromechanical drive for driving the pivoting mechanism (50) is received,
wherein the stationary element defines a housing void in which the gearing housing (30) is at least partially disposed, and
the stationary element is configured such that an energy source (40) is to be fastened to the stationary element in such a manner that the energy source (40) is electrically connected to the electromechanical drive in the gearing housing (30), wherein the stationary element is configured in multiple parts and comprises at least one first base element (10) for assembly on a bicycle frame and one second base element (20) for assembly on the first base element (10), and the housing void is defined between the first base element (10) and the second base element (20),
**characterized in that**
the stationary element is made of a metallic material, in particular of die-cast aluminium parts, and the gearing housing (30) is made of plastics material, in particular of plastic injection-moulded parts.

2. Electromechanical derailleur according to Claim 1, wherein the stationary element has a fastening for the energy source (40), said fastening comprising in particular a rotatably mounted fastening hook (13) and a fastening opening (23).

3. Electromechanical derailleur according to Claim 2, wherein the fastening hook (13) is disposed on the first base element (10), and the fastening opening (23) is disposed in the second base element (20).

4. Electromechanical derailleur according to Claim 3, wherein the energy source (40) has a fastening counter piece (43) that is capable of being brought to engage with the fastening hook (13) on the first base element (10), and a fastening protrusion (42) that is capable of being brought to engage with the fastening clearance (23) in the second base element (20) .

5. Electromechanical derailleur according to one of the preceding claims, wherein the energy source (40) is capable of being fastened to the rear of the stationary element.

6. Electromechanical derailleur according to one of the preceding claims, wherein the gearing housing (30) is releasably disposed in the housing void of the stationary element.

7. Electromechanical derailleur according to one of Claims 2 to 4, wherein the gearing housing (30) in the connected state of the first base element (10) and of the second base element (20) is fixed in a form-fitting and/or force-fitting manner in the housing void.

8. Electromechanical derailleur according to one of the preceding claims, wherein the gearing housing (30) has a first housing part (31) and a second housing part (32).

9. Electromechanical derailleur according to one of the preceding claims, wherein the gearing housing (30) has an electrical interface, in particular electrical contacts (37), to the energy source (40).

10. Electromechanical derailleur according to one of the preceding claims, wherein the pivoting mechanism (50) comprises an external pivoting element (55) which by way of a first pivot pin (51) is rotatably connected to the stationary element and by way of a third pivot pin (53) is rotatably connected to the movable element (60), and an internal pivoting element (56) which by way of a second pivot pin (52) is rotatably connected to the stationary element and by way of a fourth pivot pin (54) is rotatably connected to the movable element (60).

11. Electromechanical derailleur according to Claim 10, wherein the internal pivoting element (56) comprises a first upper pivot arm (56a) and a second lower pivot arm (56b).

12. Electromechanical derailleur according to Claim 10 or 11, wherein the four pivot pins (51, 52, 53, 54) define in each case one pivot axis (S1, S2, S3, S4) which are aligned so as to be substantially perpendicular to the rear wheel axis (A).

13. Electromechanical derailleur according to one of Claims 2 to 4, 7 and one of Claims 10 to 12, wherein the first base element (10) has a first upper pin receptacle (15) and the second base element (20) has a first lower pin receptacle (25) for receiving the first pivot pin (51), and the first base element (10) has a second upper pin receptacle (16) and the second base element (20) has a second lower pin receptacle (26) for receiving the second pivot pin (52) .

14. Electromechanical derailleur according to Claim 13, wherein the pin receptacles (15, 16, 25, 26) of the first and second base element (10, 20) extend so as to be in each case substantially perpendicular to the rear wheel axis (A).

15. Electromechanical derailleur according to one of Claims 10 to 14, wherein the second pivot pin (52) comprises a first upper pin stump (52a) and a second lower pin stump (52b).

16. Electromechanical derailleur according to one of the preceding claims, wherein a drive arm (81) which is connected in a rotationally fixed manner to an output shaft (80) of the electromechanical drive as a reaction to the operation of the electromechanical drive moves the movable element (60).

17. Electromechanical derailleur according to Claim 15 and 16, wherein the output shaft (80) extends so as to be coaxial with the second pivot pin (52), in particular with the first and second pin stump (52a, 52b) .

18. Electromechanical derailleur according to one of Claims 10 to 17, wherein a restoring spring (82) which is mounted about the fourth pivot pin (54) pretensions the movable element (60) in relation to the stationary element.

## Revendications

1. Mécanisme de commutation électromécanique destiné à être monté sur un essieu de roue arrière (A) d'une bicyclette, ledit mécanisme de commutation comportant :
- un élément fixe destiné au montage amovible sur un cadre de bicyclette,
- un élément mobile (60) comprenant un ensemble de guide-chaîne (70),
- un mécanisme de pivotement (50) qui relie l'élément mobile (60) à l'élément fixe et qui est conçu pour permettre à l'élément mobile (60) de se déplacer par rapport à l'élément fixe ;
- un boîtier de transmission (30) qui est conçu séparément de l'élément fixe et dans lequel est logé un entraînement électromécanique destiné à entraîner le mécanisme de pivotement (50),
l'élément fixe définissant un espace de boîtier libre dans lequel le boîtier de transmission (30) est au moins partiellement disposé, et
l'élément fixe étant conçu de telle sorte qu'une source d'énergie (40) doit être fixée à l'élément fixe de manière à ce que la source d'énergie (40) soit reliée électriquement à l'entraînement électromécanique dans le boîtier de transmission (30),
l'élément fixe étant conçu en plusieurs parties et comprenant au moins un premier élément de base (10) destiné à être monté sur un cadre de bicyclette et un deuxième élément de base (20) destiné à être monté sur le premier élément de base (10), et l'espace de boîtier libre étant défini entre le premier élément de base (10) et le deuxième élément de base (20),
**caractérisé en ce que**
l'élément fixe est réalisé à partir d'une matière métallique, en particulier de pièces d'aluminium moulées sous pression, et le boîtier de transmission (30) étant réalisé à partir d'une matière synthétique, notamment de pièces pointues en matière synthétique.

2. Mécanisme de commutation électromécanique selon la revendication 1, l'élément fixe comportant une fixation qui est destinée à la source d'énergie (40) et qui comprend notamment un crochet de fixation (13) monté de manière rotative et une ouverture de fixation (23).

3. Mécanisme de commutation électromécanique selon la revendication 2, le crochet de fixation (13) étant disposé sur le premier élément de base (10) et l'ouverture de fixation (23) étant ménagée dans le deuxième élément de base (20).

4. Mécanisme de commutation électromécanique selon la revendication 3, la source d'énergie (40) comportant une pièce de fixation homologue (43), qui peut être amenée en engagement avec le crochet de fixation (13) sur le premier élément de base (10), et une saillie de fixation (42) qui peut être amenée en engagement avec l'évidement de fixation (23) ménagé dans le deuxième élément de base (20).

5. Mécanisme de commutation électromécanique selon l'une des revendications précédentes, la source d'énergie (40) pouvant être fixée à l'arrière sur l'élément fixe.

6. Mécanisme de commutation électromécanique selon l'une des revendications précédentes, le boîtier de transmission (30) étant disposé de manière amovible dans l'espace de boîtier libre de l'élément fixe.

7. Mécanisme de commutation électromécanique selon l'une des revendications 2 à 4, le boîtier de transmission (30) étant fixé par complémentarité de formes et/ou en force dans l'espace de boîtier libre lorsque le premier élément de base (10) et le deuxième élément de base (20) sont reliés.

8. Mécanisme de commutation électromécanique selon l'une des revendications précédentes, le boîtier de transmission (30) comportant une première partie de boîtier (31) et une deuxième partie de boîtier (32).

9. Mécanisme de commutation électromécanique selon l'une des revendications précédentes, le boîtier de transmission (30) comportant une interface électrique, en particulier des contacts électriques (37), avec la source d'énergie (40).

10. Mécanisme de commutation électromécanique selon l'une des revendications précédentes, le mécanisme de pivotement (50) comprenant un élément de pivotement extérieur (55) qui est relié de manière rotative à l'élément fixe par le biais d'une première tige de pivotement (51) et de manière rotative à l'élément mobile (60) par le biais d'une troisième tige de pivotement (53), et un élément de pivotement intérieur (56) qui est relié de manière rotative à l'élément fixe par le biais d'une deuxième tige de pivotement (52) et de manière rotative à l'élément mobile (60) par le biais d'une quatrième tige de pivotement (54).

11. Mécanisme de commutation électromécanique selon la revendication 10, l'élément de pivotement intérieur (56) comprenant un premier bras pivotant supérieur (56a) et un deuxième bras de pivotement inférieur (56b) .

12. Mécanisme de commutation électromécanique selon la revendication 10 ou 11, les quatre tiges de pivotement (51, 52, 53, 54) définissant chacune un axe de pivotement (S1, S2, S3, S4) qui est orienté sensiblement perpendiculairement à l'essieu de roue arrière (A).

13. Mécanisme de commutation électromécanique selon l'une des revendications 2 à 4, 7 et l'une des revendications 10 à 12, le premier élément de base (10) comportant un premier logement de tige supérieur (15) et le deuxième élément de base (20) comportant un premier logement de tige inférieur (25), destinés à loger la première tige de pivotement (51), et le premier élément de base (10) comportant un deuxième logement de tige supérieur (16) et le deuxième élément de base (20) comportant un deuxième logement de tige inférieur (26), destinés à loger la deuxième tige de pivotement (52).

14. Mécanisme de commutation électromécanique selon la revendication 13, les logements de tige (15, 16, 25, 26) des premier et deuxième éléments de base (10, 20) s'étendant chacun sensiblement perpendiculairement à l'essieu de roue arrière (A).

15. Mécanisme de commutation électromécanique selon l'une des revendications 10 à 14, la deuxième tige de pivotement (52) comprenant un premier bout de tige supérieur (52a) et un deuxième bout de tige inférieur (52b) .

16. Mécanisme de commutation électromécanique selon l'une des revendications précédentes, un bras d'entraînement (81), qui est relié solidairement en rotation à un arbre de sortie (80) de l'entraînement électromécanique, déplaçant l'élément mobile (60) en réponse au fonctionnement de l'entraînement électromécanique.

17. Mécanisme de commutation électromécanique selon les revendications 15 et 16, l'arbre de sortie (80) s'étendant coaxialement à la deuxième tige de pivotement (52), en particulier aux premier et deuxième bouts de tige (52a, 52b).

18. Mécanisme de commutation électromécanique selon l'une des revendications 10 à 17, un ressort de rappel (82), qui est monté autour de la quatrième tige de pivotement (54), exerçant une précontrainte sur l'élément mobile (60) par rapport à l'élément fixe.
